(19) Europäisches Patentamt / European Patent Office / Office européen des brevets

(11) **EP 4 344 153 A1**

(12) **EUROPEAN PATENT APPLICATION**
published in accordance with Art. 153(4) EPC

(43) Date of publication:
**27.03.2024  Bulletin 2024/13**

(21) Application number: **22831822.6**

(22) Date of filing: **23.06.2022**

(51) International Patent Classification (IPC):
**H04L 47/12** *(2022.01)*

(52) Cooperative Patent Classification (CPC):
**H04L 47/12; H04L 47/22; H04L 47/31; H04L 47/50**

(86) International application number:
**PCT/CN2022/100657**

(87) International publication number:
**WO 2023/274006 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021  CN 202110721083**

(71) Applicant: **Huawei Technologies Co., Ltd.
Shenzhen, Guangdong 518129 (CN)**

(72) Inventors:
• **DAI, Huichen
  Shenzhen, Guangdong 518129 (CN)**
• **TAN, Kun
  Shenzhen, Guangdong 518129 (CN)**

(74) Representative: **Gill Jennings & Every LLP
The Broadgate Tower
20 Primrose Street
London EC2A 2ES (GB)**

(54) **ACTIVE QUEUE MANAGEMENT METHOD FOR NETWORK DEVICE AND NETWORK DEVICE**

(57)     This application discloses an active queue management method for a network device and the network device. The method may be applied to the field of data transmission, and includes: The network device calculates an idle forwarding capability (for example, a credit counter CC) of a target egress queue or a target egress port on the network device, where the idle forwarding capability represents a difference between an upper limit of a data forwarding amount of the target egress queue or the target egress port and a current actual forwarding amount. Then, the network device obtains a first packet carrying an adjustment request, and when the first packet does not have a preset mark, the network device obtains a decision result based on the idle forwarding capability and the adjustment request, and obtains a second packet by including the decision result in the first packet. In embodiments of this application, a transmitting device adjusts a sending window/rate in different manners based on different decision results. In addition, a new AQM algorithm provided in this application may decouple a queue depth on the network device from a quantity of flows on a bottleneck link, so that the queue depth on the network device can be user-defined.

A network device calculates an idle forwarding capability of a target egress queue or a target egress port on the network device, where the idle forwarding capability represents a difference between an upper limit of a data forwarding amount of the target egress queue or the target egress port and a current actual forwarding amount, and the network device is any device on a path between a transmitting device and a receiving device — 401

The network device obtains a first packet carrying an adjustment request, where the adjustment request indicates to adjust a sending window or a sending rate of the transmitting device — 402

When the network device determines that the first packet does not have a preset mark, the network device obtains a decision result based on the idle forwarding capability and the adjustment request, and includes the decision result in the first packet to obtain a second packet — 403

FIG. 4

**Description**

This application claims priority to Chinese Patent Application No. 202110721083.3, filed with the China National Intellectual Property Administration on June 28, 2021 and entitled "ACTIVE QUEUE MANAGEMENT METHOD FOR NETWORK DEVICE AND NETWORK DEVICE", which is incorporated herein by reference in its entirety.

**TECHNICAL FIELD**

This application relates to the field of data transmission, and in particular, to an active queue management method for a network device and the network device.

**BACKGROUND**

In an active queue management (active queue management, AQM) algorithm, a data packet is discarded or marked in a queue of network devices (for example, a router or a switch) to implicitly or explicitly notify a source end of a congestion status. The source end correspondingly decreases a data sending rate to respond to the discarding or the marking performed on the data packet. This avoids severer congestion. Random early detection (random early detection, RED) and an explicit congestion notification (explicit congestion notification, ECN) are AQM algorithms widely used in the network devices, and are used to cooperate with a congestion control protocol at a transport layer to improve a throughput and reduce a latency.

A basic principle of the RED/ECN is that a switch calculates a probability p based on a current queue depth of the switch and marks, based on the probability p, a packet passing through the switch. A calculation manner of the probability p is shown in the following formula (1), where $K_{min}$, $K_{max}$, and $P_{max}$ are respectively parameters such as a probability lower limit, a probability upper limit, and a preset probability value. It may be obtained from the formula that, when a queue depth q is between $K_{min}$ and $K_{max}$, the mark probability p linearly increases with the queue depth q.

$$p = \begin{cases} 0, & q < K_{min} \\ \frac{q - K_{min}}{K_{max} - K_{min}} P_{max}, & K_{min} \leq q < K_{max} \\ 1, & q \geq K_{max} \end{cases} \qquad (1)$$

However, the RED/ECN can provide only a "single-bit" signal, that is, "congested" or "uncongested" (where in some application scenarios, different levels of "congestion" degrees may be provided). A transmitting end can design a window adjustment algorithm of the transmitting end only based on the signal. The transmitting end makes a decision, and this type of algorithm has a common characteristic: When a quantity of flows on a bottleneck port on the switch increases (where a flow is defined as an object controlled by an instance of a congestion control protocol, for example, 5-tuple of a transmission control protocol (transmission control protocol, TCP)), an average queue depth on the bottleneck port also increases accordingly. Consequently, a queuing latency increases. In addition, the RED/ECN marks a packet based on a queue. Therefore, it means that the marking needs to be responded to after congestion occurs, and cannot be controlled before congestion occurs.

**SUMMARY**

Embodiments of this application provide an active queue management method for a network device and the network device, to propose a new AQM algorithm to decouple a queue depth on the network device from a quantity of flows on a bottleneck link, so that the queue depth on the network device can be user-defined.

In view of this, embodiments of this application provide the following technical solutions.

According to a first aspect, an embodiment of this application first provides an active queue management method for a network device. The method may be used in the field of data transmission, and the method includes: First, the network device calculates an idle forwarding capability of a target egress queue or a target egress port on the network device, where the idle forwarding capability represents a difference between an upper limit of a data forwarding amount of the target egress queue (including one or more egress queues) or the target egress port (including one or more egress ports) on the network device and a current actual forwarding amount, and may specifically represent a difference between an upper limit of a data forwarding amount of the target egress queue (including one or more egress queues) or the target egress port (including one or more egress ports) on the network device in preset duration (for example, 200 $\mu$s) and the current actual forwarding amount. The preset duration may be set by the network device. The network device is any device (including a transmitting device and a receiving device) on a path between the transmitting device and the receiving device. In addition to calculating the idle forwarding capability of the target egress queue or the target egress port on the network device, the network device also obtains a packet carrying an adjustment request, where the packet may be referred to as a first packet, and the adjustment request may be a window adjustment request or a rate adjustment request. The window adjustment request indicates to adjust a sending window of the transmitting device, and the rate adjustment request indicates to adjust a sending rate of the transmitting device. After obtaining the first packet, the network device first determines whether the first packet has a preset mark. When the network device determines that the first packet does not have the preset mark, the network device obtains a decision result based on a value of the idle forwarding capability and a value of the adjustment request, and obtains a second packet by including the decision result in the first packet. Specifically, the network device obtains the decision result by comparing the value of the idle forwarding capability with the value of the adjustment request. Therefore, in a process of comparing the values, a unit of the value of the idle forwarding capability needs to be consistent with a unit of the value of the adjustment request. If the units are inconsistent, the network device further needs to convert the units of the two values, to enable the units of the two values to be consistent.

It should be noted herein that, when the network device is the transmitting device, there are two processing manners herein: (I) The transmitting device performs the step of "obtaining a first packet carrying an adjustment request". To be specific, the first packet is generated by the transmitting device (where in this case, the generated first packet is an initial packet and does not have the preset mark), and the transmitting device includes the adjustment request in the first packet. Then, the transmitting device obtains the decision result based on the value of the adjustment request and the obtained value of the idle forwarding capability, and then obtains a second packet by including the decision result in the first packet, to subsequently send the second packet to a next-hop device. (II) The transmitting device does not perform the step of "obtaining a first packet carrying an adjustment request". To be specific, the transmitting device may alternatively not include the adjustment request in the first packet (where in this case, the generated first packet is an initial packet and does not have the preset mark), but directly obtains the decision result based on the value of the adjustment request and the obtained value of the idle forwarding capability after obtaining the value of the idle forwarding capability through calculation, and then obtains a second packet by including the decision result in the first packet, to subsequently send the second packet to a next-hop device.

The foregoing implementation of this application provides a new AQM algorithm, to decouple a queue depth on the network device from a quantity of flows on a bottleneck link, so that the queue depth on the network device can be user-defined.

In a possible implementation of the first aspect, when the first packet does not have the preset mark, and the network device determines, by comparing the value of the idle forwarding capability with the value of the adjustment request (where the value of the adjustment request may be represented by II), that the value of the idle forwarding capability is greater than or equal to the value II of the adjustment request, a decision result obtained by the network device is "grant", that is, grant information is used as the decision result, where the grant information represents that the transmitting device is allowed to increase the sending window or the sending rate. It should be noted that, in some other implementations of this application, when the first packet does not have the preset mark, and the network device determines, by comparing the value of the idle forwarding capability with the value II of the adjustment request, that the value of the idle forwarding capability is greater than or equal to the value II of the adjustment request, the network device may further subtract the value II of the adjustment request from the current value of the idle forwarding capability, to obtain a new value of the idle forwarding capability. For example, the value of the idle forwarding capability is a value CC of a credit counter, that is, CC=CC-II.

As described in the foregoing implementation of this application, when the first packet does not have the preset mark, and the value of the idle forwarding capability is greater than or equal to the value II of the adjustment request, the decision result of the network device is the grant information. This implementation is feasible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability and the value II of the adjustment request, and a corresponding decision result can be obtained only by performing a simple comparison operation. Therefore, the manner is easy to be implemented on a high-rate network device.

In a possible implementation of the first aspect, when the first packet does not have the preset mark, and the network device determines, by comparing the value of the idle forwarding capability value with the value II of the adjustment request, that the value of the idle forwarding capability is greater than or equal to 0 and less than the value II of the adjustment request, the network device marks the first packet based on a preset probability. Specifically, a manner in which the network device marks the first packet based on the preset probability may be marking the first packet based on a preset fixed probability p. Alternatively, a dynamic probability p' of a current round is obtained through calculation after each time it is determined that the value of the idle forwarding capability is greater than or equal to 0 and less than the value II of the adjustment request, and then the first packet is marked based on the dynamic probability p'. This is not limited in this application.

It should be noted herein that, there are the following two results for marking the first packet based on the preset probability. Different results indicate different decision results obtained by the network device. When the first packet is successfully marked with the preset mark by the network device based on the preset probability, the network device uses, as the decision result, marked information indicating that the first packet is marked with the preset mark. That is, the decision result obtained by the network device is "marked", and the marked information represents that the transmitting device is allowed to decrease the sending window or the sending rate. Similarly, it should be noted that, in some other implementations of this application, when the first packet does not have the preset mark, and the network device determines, by comparing the value of the idle forwarding capability with the value II of the adjustment request, that the value of the idle forwarding capability is greater than or equal to 0 and less than the value II of the adjustment request, the network device may further add a target preset value (which may be represented by β) to a value of a deficit counter (deficit counter, DC) corresponding to the idle forwarding capability, to obtain a new value of the deficit counter (where the value of the deficit counter may be represented by DC), that is, DC=DC+β. It should be noted herein that, the DC is in one-to-one correspondence with the value of the idle forwarding capability, and one value of the idle forwarding capability corresponds to one DC.

As described in the foregoing implementation of this application, when the first packet does not have the preset mark, and the value of the idle forwarding capability is greater than or equal to 0 and less than the value II of the adjustment request, the network device needs to mark the first packet based on the preset probability. If the first packet is successfully marked with the preset mark, the decision result determined by the network device is the marked information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability, DC, and II, and a corresponding decision result can be obtained only by performing a simple comparison operation. Therefore, the manner is easy to be implemented on a high-rate network device.

In a possible implementation of the first aspect, when the first packet is not marked with the preset mark by the network device based on the preset probability, the network device further compares the value DC of the deficit counter corresponding to the idle forwarding capability with the value II of the adjustment request (on the premise that units of the two values are consistent), and then obtains a specific decision result based on a comparison result. Similarly, it should be noted herein that, different comparison results indicate different decision results obtained by the network device. When the value DC of the deficit counter corresponding to the idle forwarding capability is greater than or equal to the value II of the adjustment request, a decision result obtained by the network device is "grant", that is, grant information is used as the decision result, where the grant information represents that the transmitting device is allowed to increase the sending window or the sending rate. It should be noted that, in some other implementations of this application, when the first packet is not marked with the preset mark by the network device based on the preset probability, and the network device determines, by comparing the value DC of the deficit counter with the value II of the adjustment request, that the value DC of the deficit counter is greater than or equal to the value II of the adjustment request, the network device may further subtract the value II of the adjustment request from the current value DC of the deficit counter, to obtain a new value DC of the deficit counter, that is, DC=DC-II.

As described in the foregoing implementation of this application, when the first packet does not have the preset mark, and the value of the idle forwarding capability is greater than 0 and less than the value II of the adjustment request, the network device needs to mark the first packet based on the preset probability. If the first packet is not marked with the preset mark, the network device further needs to compare the value DC of the deficit counter with the value II of the adjustment request, and when the value DC of the deficit counter is greater than or equal to the value II of the adjustment request, the decision result determined by the network device is the grant information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability, DC, and II, and a corresponding decision result can be obtained only by performing a simple comparison operation. Therefore, the manner is easy to be implemented on a high-rate network device.

In a possible implementation of the first aspect, when the network device determines that the first packet is not marked with the preset mark, and the value DC of the deficit counter corresponding to the idle forwarding capability is less than the value II of the adjustment request, a decision result obtained by the network device is "rejection", that is, rejection information is used as the decision result, where the rejection information represents that the transmitting device is not allowed to adjust the sending window or the sending rate.

As described in the foregoing implementation of this application, when the first packet is not marked with the preset mark based on the preset probability, and the value DC of the deficit counter is less than the value II of the adjustment request, the decision result determined by the network device is the rejection information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability, DC, and II, and a corresponding decision result can be obtained only by performing a simple comparison operation. Therefore, the manner is easy to be implemented on a high-rate network device.

In a possible implementation of the first aspect, when the first packet does not have the preset mark, and the network device determines, by comparing the value of the idle forwarding capability with the value II of the adjustment request, that the value of the idle forwarding capability is less than 0, the network device marks the preset mark on the first packet, and uses, as the decision result, marked information indicating that the first packet is marked with the preset mark. That is, the decision result obtained by the network device is "marked", and the marked information represents that the transmitting device is allowed to decrease the sending window or the sending rate.

As described in the foregoing implementation of this application, when the first packet does not have the preset mark, and the value of the idle forwarding capability is less than 0, the network device marks the first packet, and determines that the decision result is the marked information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability and II, and a corresponding decision result can be obtained only by performing a simple comparison operation. Therefore, the manner is easy to be implemented on a high-rate network device.

In a possible implementation of the first aspect, after the network device obtains the first packet, if the network device obtains, by determining whether the first packet has the preset mark, that the first packet has the preset mark, the network device uses, as the decision result, the marked information indicating that the first packet is marked with the preset mark. That is, the decision result obtained by the network device is "marked", and the marked information represents that the transmitting device is allowed to decrease the sending window or the sending rate. It should be noted that, when the network device determines that the first packet has the preset mark at the beginning, the network device may further add a target preset value β to the value of the idle forwarding capability, to obtain a new value of the idle forwarding capability. For example, the value of the idle forwarding capability is CC, that is, $CC=CC+\beta$.

As described in the foregoing implementation of this application, when the first packet has the preset mark, the network device does not need to compare the value of the idle forwarding capability with the value of the adjustment request, but directly determines the marked information as the decision result. In this way, when different conditions are met, different decision results are obtained. This implementation is flexible.

In a possible implementation of the first aspect, a process in which the network device calculates the idle forwarding capability of the target egress queue or the target egress port on the network device may be specifically: The network device calculates a value of a credit counter (credit counter, CC) based on an upper limit (which may be represented by B*τ, where B is a link bandwidth or a link rate, and is not limited herein) of a data forwarding amount of the target egress queue or the target egress port in preset duration τ and a total amount (which may be represented by TxSize) of data passing through the target egress queue or the target egress port in the preset duration τ, where the value (which may be represented by CC) of the credit counter represents the value of the idle forwarding capability.

As described in the foregoing implementation of this application, an implementation in which the network device calculates the idle forwarding capability of the target egress queue or the target egress port on the network device is to calculate the idle forwarding capability of the target egress queue or the target egress port on the network device based on two parameters. This involves a small quantity of parameters, and is convenient for implementation.

In a possible implementation of the first aspect, the process in which the network device calculates the idle forwarding capability of the target egress queue or the target egress port on the network device may further be specifically: The network device calculates the value of the credit counter based on the upper limit B*τ of the data forwarding amount of the target egress queue or the target egress port in the preset duration τ, the total amount TxSize of the data passing through the target egress queue or the target egress port in the preset duration τ, and a current egress queue depth, where the current egress queue depth is a depth of the target egress queue or a depth of an egress queue corresponding to the target egress port, and may be represented by q. It should be noted that, in this embodiment of this application, q may refer to a sum of all current egress queue depths, a largest one of all the current egress queue depths, or (one or more) current egress queue depths greater than a preset threshold. A meaning represented by q is not specifically limited in this application. For ease of description, q in the following embodiments represents the sum of the current egress queue depths. Details are not described subsequently.

As described in the foregoing implementation of this application, an implementation in which the network device calculates the idle forwarding capability of the target egress queue or the target egress port on the network device is to calculate the idle forwarding capability of the target egress queue or the target egress port on the network device based on three parameters. This improves accuracy of calculating the value of the credit counter.

In a possible implementation of the first aspect, the process in which the network device calculates the idle forwarding capability of the target egress queue or the target egress port on the network device may further be specifically: The network device calculates the value of the credit counter based on the upper limit B*$\tau$ of the data forwarding amount of the target egress queue or the target egress port in the preset duration $\tau$, the total amount TxSize of the data passing through the target egress queue or the target egress port in the preset duration $\tau$, the current egress queue depth q, and a preset queue depth (which may be represented by Qt). It should be noted that, in this embodiment of this application, the preset queue depth Qt is a user-defined value. For example, Qt may be a specific value, for example, 0 KB, 10 KB, or 20 KB, based on an actual requirement. This is not specifically limited in this application. For example, when the preset queue depth Qt is set to 0 KB, it indicates that the queue depth of the target egress queue or the depth of the egress queue corresponding to the target egress port needs to be maintained at 0. In this way, an extremely low queuing latency can be achieved.

As described in the foregoing implementation of this application, an implementation in which the network device calculates the idle forwarding capability of the target egress queue or the target egress port on the network device is to calculate the idle forwarding capability of the target egress queue or the target egress port on the network device based on four parameters. The preset queue depth Qt is additionally introduced, so that the egress queue depth on the network device can be controlled at a specified depth value, thereby reducing a queuing latency.

In a possible implementation of the first aspect, a specific implementation in which the network device calculates the value of the credit counter CC based on the upper limit B*$\tau$ of the data forwarding amount of the target egress queue or the target egress port in the preset duration $\tau$, the total amount TxSize of the data passing through the target egress queue or the target egress port in the preset duration $\tau$, the current egress queue depth q, and the preset queue depth Qt may be: First, the network device subtracts the total amount TxSize of the data passing through the target egress queue or the target egress port in the preset duration $\tau$ from the upper limit B*$\tau$ of the data forwarding amount of the target egress queue or the target egress port in the preset duration $\tau$, to obtain a first subtraction result; adds the first subtraction result and the preset queue depth Qt, to obtain an addition result; subtracts the sum q (which may alternatively be a largest value of the current queue depths in some embodiments, and is not limited herein) of the current egress queue depths from the addition result, to obtain a second subtraction result; and finally multiplies the second subtraction result by a preset coefficient, to obtain the value of the credit counter, where a unit of the value of the credit counter is a byte.

In the foregoing implementation of this application, a specific implementation of calculating the value of the credit counter CC is described. The algorithm has low complexity, and does not involve a plurality of multiplication and division operations, to reduce storage overheads.

In a possible implementation of the first aspect, a specific implementation in which the network device calculates the value of the credit counter CC based on the upper limit B*$\tau$ of the data forwarding amount of the target egress queue or the target egress port in the preset duration $\tau$, the total amount TxSize of the data passing through the target egress queue or the target egress port in the preset duration $\tau$, the current egress queue depth q, and the preset queue depth Qt may be: First, the network device subtracts the total amount TxSize of the data passing through the target egress queue or the target egress port in the preset duration $\tau$ from the upper limit B*$\tau$ of the data forwarding amount of the target egress queue or the target egress port in the preset duration $\tau$, to obtain a first subtraction result; adds the first subtraction result and the preset queue depth Qt, to obtain an addition result; subtracts the sum q (which may alternatively be a largest value of the current queue depths in some embodiments, and is not limited herein) of the current egress queue depths from the addition result, to obtain a second subtraction result; and finally multiplies the second subtraction result by a preset coefficient, and divides an obtained multiplication result by the preset duration $\tau$, to finally obtain the value of the credit counter, where a unit of the value of the credit counter is a rate.

In the foregoing implementation of this application, another specific implementation of calculating the value of the credit counter CC is described. This implementation has selectivity and flexibility.

In a possible implementation of the first aspect, if the network device is not the receiving device, it indicates that the network device is not a last-hop device on the transmission path. Therefore, the network device may further send the obtained second packet (namely, the first packet carrying the decision result) to a next-hop device.

As described in a possible implementation of the first aspect, when the network device is not the last-hop device, the network device further needs to continue to deliver the obtained second packet, to implement packet transferring. This implementation is feasible.

In a possible implementation of the first aspect, if the next-hop device of the network device is the receiving device, after receiving the second packet sent by the network device, the receiving device parses the second packet, includes the decision result in an acknowledgment packet, and sends the acknowledgment packet to the transmitting device (where a path through which the receiving device returns the acknowledgment packet to the transmitting device is not necessarily limited to the original path), where the acknowledgment packet indicates the transmitting device to adjust the sending window (when the adjustment request is the window adjustment request) or the sending rate (when the adjustment request is the rate adjustment request) of the transmitting device based on the decision result carried in the acknowledgment packet.

As described in the foregoing implementation of this application, if the next-hop device is the receiving device, it indicates that the decision result obtained by the current network device is a final decision result (which is not overwritten), the final decision result needs to be carried in the acknowledgment packet and returned to the transmitting device. The transmitting device may adjust the sending window or the sending rate based on the final decision result. This implementation is flexible.

In a possible implementation of the first aspect, if the network device is the receiving device, there are also two processing manners herein: (I) The receiving device performs the step of "including a decision result in a first packet to obtain a second packet". To be specific, when the receiving device determines that the first packet does not have the preset mark, the receiving device obtains the decision result based on the idle forwarding capability and the adjustment request, and obtains a second packet by including the decision result in the first packet. Then, the receiving device parses the second packet, includes, in an acknowledgment packet, the decision result obtained through parsing, and sends the acknowledgment packet to the transmitting device, where the acknowledgment packet indicates the transmitting device to adjust the sending window (when the adjustment request is the window adjustment request) or the sending rate (when the adjustment request is the rate adjustment request) of the transmitting device based on the decision result carried in the acknowledgment packet. (II) The receiving device does not perform the step of "including a decision result in a first packet to obtain a second packet". Instead, when the receiving device determines that the first packet does not have the preset mark, the receiving device obtains the decision result based on the idle forwarding capability and the adjustment request, where the decision result is not carried in the first packet, but is directly carried in an acknowledgment packet; and sends the acknowledgment packet to the transmitting device, where the acknowledgment packet indicates the transmitting device to adjust the sending window (when the adjustment request is the window adjustment request) or the sending rate (when the adjustment request is the rate adjustment request) of the transmitting device based on the decision result carried in the acknowledgment packet.

In the foregoing implementation of this application, an implementation of how the receiving device processes the decision result if the current network device is the receiving device is specifically described. This implementation has selectivity and wide application.

In a possible implementation of the first aspect, if the decision result is the marked information, the acknowledgment packet specifically indicates the transmitting device to decrease the sending window or the sending rate of the transmitting device based on the decision result, where a decrease amplitude is obtained based on a target preset value $\beta$. For example, the sending window or the sending rate of the transmitting device may be decreased by $\beta$ on an original basis, or the sending window or the sending rate of the transmitting device may be decreased by $k_1*\beta$ on an original basis, where $k_1$ is a user-defined parameter, and $k_1>0$.

As described in the foregoing implementation of this application, different decision results carried in the acknowledgment packet indicate different manners in which the transmitting device adjusts the sending window and the sending rate based on the acknowledgment packet. Adjustment logic is simple and easy to implement, and has selectivity.

In a possible implementation of the first aspect, if the decision result is the grant information, the acknowledgment packet specifically indicates the transmitting device to increase the sending window or the sending rate of the transmitting device based on the decision result, where an increase amplitude is obtained based on the value II of the adjustment request. For example, the sending window or the sending rate of the transmitting device may be increased by II on an original basis, or the sending window or the sending rate of the transmitting device may be increased by $k_2*II$ on an original basis, where $k_2$ is a user-defined parameter, and $k_2>0$.

As described in the foregoing implementation of this application, different decision results carried in the acknowledgment packet indicate different manners in which the transmitting device adjusts the sending window and the sending rate based on the acknowledgment packet. Adjustment logic is simple and easy to implement, and has selectivity.

In a possible implementation of the first aspect, if the decision result is the rejection information, the acknowledgment packet specifically indicates the transmitting device not to increase or decrease (that is, not to adjust) the sending window or the sending rate of the transmitting device based on the decision result.

As described in the foregoing implementation of this application, different decision results carried in the acknowledgment packet indicate different manners in which the transmitting device adjusts the sending window and the sending rate based on the acknowledgment packet. Adjustment logic is simple and easy to implement, and has selectivity.

A second aspect of embodiments of this application provides a network device. The network device has a function of implementing the method according to any one of the first aspect or the possible implementations of the first aspect. The function may be implemented by hardware, or may be implemented by hardware executing corresponding software. The hardware or the software includes one or more modules corresponding to the foregoing function.

A third aspect of embodiments of this application provides a network device, which may include a memory, a processor, and a bus system. The memory is configured to store a program. The processor is configured to invoke the program stored in the memory, to perform the method according to any one of the first aspect or the possible implementations of the first aspect in embodiments of this application.

A fourth aspect of embodiments of this application provides a computer-readable storage medium. The computer-readable storage medium stores instructions. When the instructions are run on a computer, the computer is enabled to perform the method according to any one of the first aspect or the possible implementations of the first aspect.

A fifth aspect of embodiments of this application provides a computer program. When the computer program is run on a computer, the computer is enabled to perform the method according to any one of the first aspect or the possible implementations of the first aspect.

A sixth aspect of embodiments of this application provides a chip. The chip includes at least one processor and at least one interface circuit. The interface circuit is coupled to the processor. The at least one interface circuit is configured to: perform a receiving and sending function, and send instructions to the at least one processor. The at least one processor is configured to run a computer program or the instructions. The processor has a function of implementing the method according to any one of the first aspect or the possible implementations of the first aspect. The function may be implemented by hardware, implemented by software, or implemented by a combination of hardware and software. The hardware or the software includes one or more modules corresponding to the foregoing function. In addition, the interface circuit is configured to communicate with a module other than the chip.

## BRIEF DESCRIPTION OF DRAWINGS

FIG. 1 is a schematic diagram of a relationship between an egress port and an egress queue on a network device according to an embodiment of this application;

FIG. 2 is a schematic diagram of a system architecture according to an embodiment of this application;

FIG. 3 is another schematic diagram of a system architecture according to an embodiment of this application;

FIG. 4 is a schematic flowchart of an active queue management method for a network device according to an embodiment of this application;

FIG. 5A and FIG. 5B are another schematic flowchart of an active queue management method for a network device according to an embodiment of this application;

FIG. 6 is a schematic flowchart in which a transmitting device adjusts a sending window or a sending rate based on a decision result according to an embodiment of this application;

FIG. 7 is a schematic diagram of a framework for implementing a slow start algorithm by using an active queue management method that is for a network device and that is provided in embodiments of this application according to an embodiment of this application;

FIG. 8 is a schematic diagram of a framework for implementing an AIMD algorithm by using an active queue management method that is for a network device and that is provided in embodiments of this application according to an embodiment of this application;

FIG. 9 is a schematic diagram of effect comparison between a method in this application and an existing method according to an embodiment of this application;

FIG. 10 is a schematic diagram of a structure of a network device according to an embodiment of this application; and

FIG. 11 is another schematic diagram of a structure of a network device according to an embodiment of this application.

## DESCRIPTION OF EMBODIMENTS

Embodiments of this application provide an active queue management method for a network device and the network device, to propose a new AQM algorithm to decouple a queue depth on the network device from a quantity of flows on a bottleneck link, so that the queue depth on the network device can be user-defined.

The terms such as "first" and "second" in this specification, claims, and the foregoing accompanying drawings of this application are merely used to distinguish between similar objects, but are not necessarily used to describe a specific order or time sequence. It should be understood that the terms used in such a way are interchangeable in proper circumstances, and this is merely a distinguishing manner for describing objects having a same attribute in embodiments of this application. In addition, the terms "include", "have", and any other variants are intended to cover a non-exclusive inclusion, so that a process, method, system, product, or device that includes a series of units is not necessarily limited to those units, but may include other units not expressly listed or inherent to the process, method, system, product, or device.

To better understand solutions in embodiments of this application, the following first describes related terms and concepts that may be used in embodiments of this application. It should be understood that explanations of the related concepts may be limited due to specific situations of embodiments of this application, but it does not mean that this application can only be limited to the specific situations. There may be differences in the specific situations of different embodiments. Details are not limited herein.

(1) Network device

The network device and a component are physical entities connected to a network. There are various types of network devices, and a quantity of types is increasing. Basic network devices include: a computer (regardless of whether the computer is a personal computer or a server), a hub, a switch, a bridge, a router, a gateway, a network interface card (NIC), a wireless access point (WAP), a printer, a modem, an optical fiber transceiver, an optical cable, and the like. Specifically, a local area network, a metropolitan area network, or a wide area network usually physically includes a transmission medium and network connection devices such as a network adapter, the hub, the switch, the router, a network cable, and an RJ45 connector. The network device further includes a device like a repeater, a bridge, a router, a gateway, a firewall, or a switch.

It should be noted that, in embodiments of this application, in addition to the foregoing conventional devices, the network device may further be a terminal device like a mobile phone, a smart band, or a smart watch. On a data transmission path, the network device may be specifically any device (including a transmitting device and a receiving device) on a path between the transmitting device and the receiving device.

(2) Egress queue

In embodiments of this application, when types of queues on the network device include both an ingress queue and an egress queue, the egress queue is a conventional egress queue. When there is only one type of queue on the network device, the type of queue is the egress queue described in this application (in other words, the network device needs to have the egress queue, but may not have the ingress queue). It should be noted that, there may be one or more egress queues on one network device.

(3) Egress port

In embodiments of this application, there may be one or more egress ports on the network device. One egress port may correspond to one or more egress queues. Quantities of egress queues corresponding to all egress ports may be the same or may be different. This is not limited in this application.

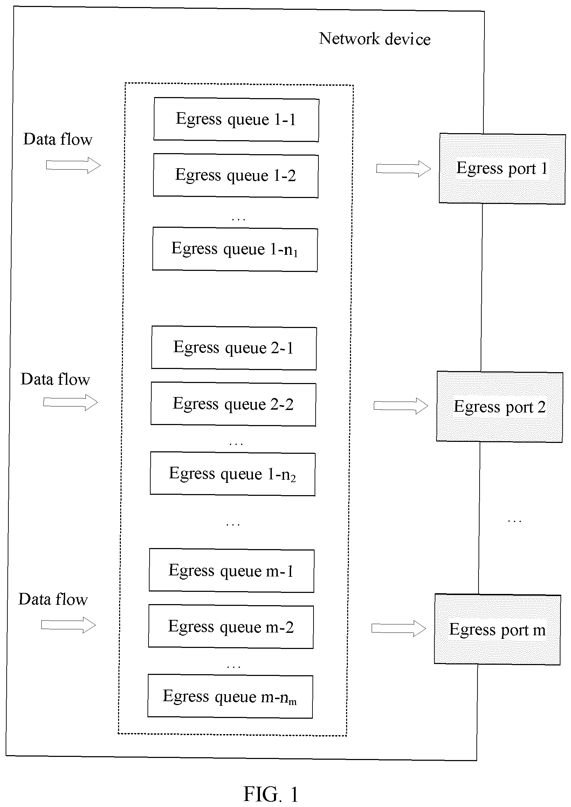

It should be noted herein that, each network device (for example, the switch) has an ingress port and an egress port, and both the ingress port and the egress port are relative to a data flow. Therefore, there is no correspondence between the ingress port and the egress port. For some data flows, a port is an egress port, but for a data flow in a reverse flow direction, the port is an ingress port. For details, refer to FIG. 1. FIG. 1 is a schematic diagram of a relationship between an egress port and an egress queue on a network device according to an embodiment of this application, where m is a quantity of egress ports of the network device, $m \geq 1$, $n_1$, $n_2$, ..., and $n_m$ are respectively quantities of egress queues corresponding to the m egress ports, $n_1 \geq 1$, $n_2 \geq 1$, ..., and $n_m \geq 1$. In addition, values of $n_1$, $n_2$, ..., and $n_m$ may be completely different, partially the same, or completely the same. This is not limited herein.

(4) Idle forwarding capability

In embodiments of this application, the idle forwarding capability represents a difference between an upper limit of a data forwarding amount of the target egress queue (including one or more egress queues) or the target egress port (including one or more egress ports) on the network device and a current actual forwarding amount, and may specifically represent a difference between an upper limit of a data forwarding amount of the target egress queue (including one or more egress queues) or the target egress port (including one or more egress ports) on the network device in preset duration (for example, 200 microseconds ($\mu$s)) and the current actual forwarding amount. The preset duration may be set by the network device. In different correspondence cases, specific cases of calculating the idle forwarding capability of the network device are respectively as follows:

a. If the calculated idle forwarding capability of the network device corresponds to one egress queue, the calculated idle forwarding capability is an idle forwarding capability of the egress queue. In embodiments of this application, an objective of calculating the idle forwarding capability is to enable a depth of the egress queue to maintain at a small value in a congestion status.

b. If the calculated idle forwarding capability of the network device corresponds to p egress queues, the calculated idle forwarding capability is a total idle forwarding capability of the p egress queues. In embodiments of this application, an objective of calculating the idle forwarding capability is to enable a sum of depths of the p egress queues to maintain at a small value in a congestion status.

c. If the calculated idle forwarding capability of the network device corresponds to one egress port, the calculated idle forwarding capability is a total idle forwarding capability of an egress queue (which may be one or more egress queues) corresponding to the egress port. In embodiments of this application, an objective of calculating the idle forwarding capability is to enable a sum of depths of all the egress queues corresponding to the egress port to maintain at a small value in a congestion status.

d. If the calculated idle forwarding capability of the network device corresponds to q egress ports, the calculated idle forwarding capability is a total idle forwarding capability of egress queues corresponding to the q egress ports (where each egress port corresponds to at least one egress queue). In embodiments of this application, an objective of calculating the idle forwarding capability is to enable a sum of depths of all the egress queues corresponding to the q egress ports to maintain at a small value in a congestion status.

For ease of understanding, the following provides descriptions by using an example of calculating an idle forwarding capability of one egress port on the network device. It is assumed that the egress port on the network device is a port of 100 Gbps, and a maximum data forwarding amount in preset duration 100 microseconds ($\mu$s) is 100 Gbps* 10 $\mu$s=125 KB, where 125 KB is an upper limit (which may also be referred to as a maximum forwarding capability measured by using a data amount) of the data forwarding amount of the egress port in the preset duration 100 $\mu$s. If an actual forwarding amount of the egress port in the preset duration 100 $\mu$s is 100 KB, the idle forwarding capability of the egress port is 25 KB.

It should be noted that, in some implementations of this application, the idle forwarding capability may also be represented as an idle bandwidth. If the idle bandwidth represents the idle forwarding capability, a unit needs to be converted. The foregoing example is still used. The idle bandwidth may be represented as: 25 KB/10 $\mu$s=20 Gbps.

It should be further noted that, in embodiments of this application, the idle forwarding capability may be measured by using the data amount, or may be measured by using a quantity of packets. This is not limited in this application. For ease of description, in the following embodiments of this application, a value of the idle forwarding capability is measured by using the data amount.

(5) Message transferring

In a computer system, message transferring is a general term of a type of data communication method performed between processes or software components. During message transferring, to-be-communicated data is abstracted and encapsulated into a "message", and two or more parties participating in communication implement message transferring between the processes or the components by invoking primitives such as message sending and receiving, to complete data communication.

(6) Data flow diagram

The data flow diagram is a data structure, in a diagram form, that represents a flow direction and a computing relationship of data in computing logic to reflect a design principle and an implementation procedure of the computing logic.

(7) Parameter in the data flow diagram

In the data flow diagram, the parameter refers to data that is carried by a connection edge of a computing node in the diagram and that is used by the computing node for processing or that is fed back by the computing node.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

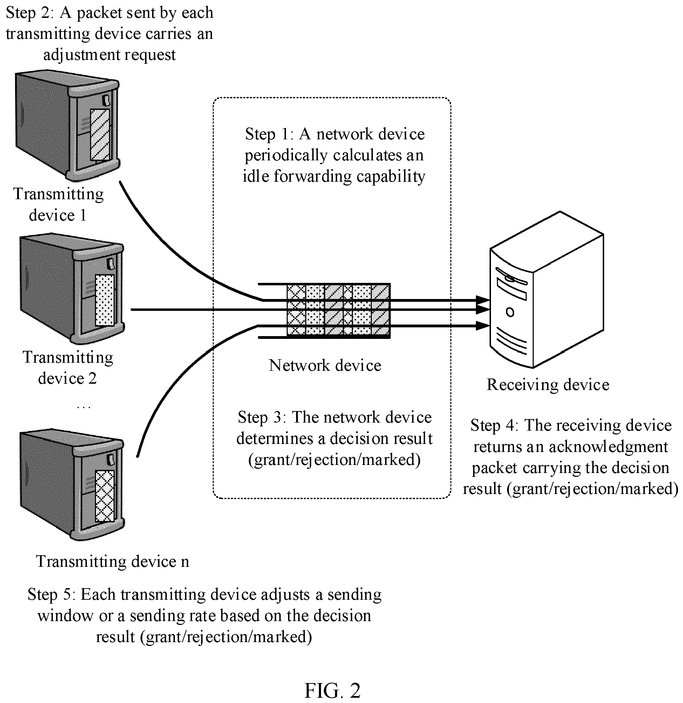

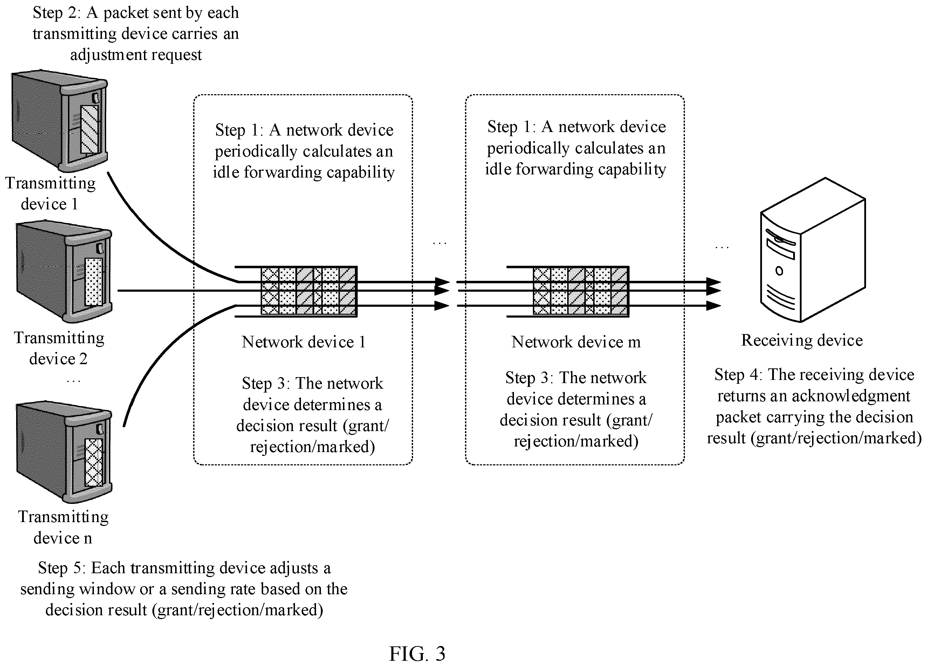

First, a system architecture and an overall procedure to which a method in embodiments of this application is applied are described. For details, refer to FIG. 2 and FIG. 3. FIG. 2 is a schematic diagram of a system architecture according to an embodiment of this application. FIG. 3 is another schematic diagram of a system architecture according to an embodiment of this application. A plurality of servers are networked by using one network device (or a plurality of network devices, where FIG. 2 shows a case of one network device, and FIG. 3 shows a case of a plurality of network devices). In embodiments of this application, the server may be a conventional server like a server on a cloud side, a data center network, or a cluster, or may be a terminal device (for example, a virtual reality (virtual reality, VR) device, a mobile phone, a tablet, a notebook computer, or an intelligent wearable device) or a wheeled mobile device (for example, a self-driving vehicle or an assisted driving vehicle). This is not specifically limited in this application. The network device described in this application may be any device (including a transmitting device and a receiving device) on a path between the transmitting device and the receiving device. However, the network devices shown in FIG. 2 and FIG. 3 do not include the transmitting device or the receiving device. To be specific, the network device in FIG. 2 is the only device on the path between the transmitting device and the receiving device. Similarly, the network device in FIG. 3 is any device on the path between the transmitting device and the receiving device. The following describes, based on the system structure shown in FIG. 3, an overall procedure of an active queue management method that is for a network device and that is provided in embodiments of this application. The method may specifically include the following several steps.

Step 1: The network device periodically calculates an idle forwarding capability of a target egress queue (or a target egress port) on the network device, where the target egress queue may include one or more egress queues, the target egress port may include one or more egress ports, and the network device is any device on a path between a transmitting device and a receiving device.

Step 2: A packet sent by the transmitting device carries an adjustment request. The adjustment request may be a window adjustment request or a rate adjustment request. This is not limited in this application. The window adjustment request (or the rate adjustment request) carries a specific value that a sending window (or a sending rate) needs to be increased, and the specific value may be represented by II. The window adjustment request indicates to adjust the sending window of the transmitting device, and the rate adjustment request indicates to adjust the sending rate of the transmitting device. The transmitting device herein is any one of n transmitting devices in a networking structure, where n≥1.

Step 3: After the packet sent by the transmitting device arrives at the network device, the network device first determines whether the packet is marked with a preset mark. When the packet does not have the preset mark, the network device obtains a decision result based on a value of the idle forwarding capability calculated in step 1 and a value of the window adjustment request (or the rate adjustment request) in step 2, where the decision result is carried in the packet, and the decision result indicates the transmitting device to adjust the sending window (or the sending rate). The decision result includes the following three cases: 1. Grant information is used as the decision result, to indicate that the transmitting device is granted to increase the sending window (or the sending rate). 2. Rejection information is used as the decision result, to indicate that the transmitting device is rejected to adjust the sending window (or the sending rate). 3. The packet is marked with the preset mark, and marked information is used as the decision result, to indicate to decrease the sending window (or the sending rate) of the transmitting device. It should be noted that, if a result of determining, by the network device, whether the packet is marked with the preset mark is that the packet is marked with the preset mark, the decision result does not need to be obtained based on the value of the idle forwarding capability and the value of the window adjustment request (or the rate adjustment request), and the marked information is directly used as the decision result, to indicate to decrease the sending window (or the sending rate) of the transmitting device. This case may belong to the foregoing case 3. To be specific, the foregoing case 3 may be summarized as: 3. If the packet is marked with the preset mark (regardless of whether the packet is marked by a previous network device or the packet is marked by the network device), the marked information is used as the decision result, to indicate to decrease the sending window (or the sending rate) of the transmitting device.

Step 4: After the packet carrying the decision result arrives at the receiving device, the receiving device parses out the decision result, includes the decision result in an acknowledgment packet (acknowledge, ACK), and returns the acknowledgment packet to the transmitting device.

Step 5: After receiving the acknowledgment packet, the transmitting device parses out the decision result carried in the acknowledgment packet, and adjusts the sending window (or the sending rate) based on the decision result. An adjustment manner includes: increasing the sending window (or the sending rate), not increasing or decreasing the sending window (or the sending rate), or decreasing the sending window (or the sending rate).

The network device included in the system structure shown in FIG. 3 is any device on the path between the transmitting device and the receiving device. In other words, the network device shown in FIG. 3 does not include the transmitting device or the receiving device, and there are a plurality of network devices. In this case, the network device may be a first-hop device after the transmitting device, or may be a last-hop device before the receiving device. This is not specifically limited herein.

It should be noted that, assuming that a previous-hop device of the network device is not the transmitting device but is another network device, two decision results, in the cases 1 and 2, decided by the previous-hop device may be overwritten by the current network device. If the previous-hop device determines a decision result in the case 3, in other words, any previous network device marks the packet with the preset mark, a subsequent network device can obtain only the decision result in the case 3. A specific overwriting rule includes but is not limited to the following manners.

a. If a decision result of a previous network device is the decision result in the case 1, that is, the decision result is grant information, the current network device may obtain the decision result in the foregoing case 1, 2, or 3, to be specific, the decision result may be grant information, rejection information, or marked information.

b. If a decision result of a previous network device is the decision result in the case 2, that is, the decision result is rejection information, the current network device may obtain the decision result in the foregoing case 2 or 3, to be specific, the decision result may be rejection information or marked information.

c. If a decision result of a previous network device is the decision result in the case 3, that is, the decision result is marked information, the current network device may obtain the decision result in the foregoing case 3, to be specific, the decision result can only be marked information.

The foregoing describes, based on the system structure shown in FIG. 3, the overall procedure of the active queue management method that is for the network device and that is provided in embodiments of this application. The following describes, based on the system structure shown in FIG. 2, an overall procedure of an active queue management method that is for a network device and that is provided in embodiments of this application. The method may specifically include the following several steps.

Step 1: The network device periodically calculates an idle forwarding capability of a target egress queue (or a target egress port) on the network device, where the target egress queue may include one or more egress queues, and the target egress port may include one or more egress ports.

Step 2: A packet sent by a transmitting device carries an adjustment request. The adjustment request may be a window adjustment request or a rate adjustment request. This is not limited in this application. The window adjustment request (or the rate adjustment request) indicates to adjust a sending window (or a sending rate) of the transmitting device. The transmitting device herein is any one of n transmitting devices in a networking structure, where $n \geq 1$.

Step 3: After the packet sent by the transmitting device directly arrives at the network device, because the packet does not carry a preset mark when being sent by the transmitting device, the network device does not need to determine whether the packet is marked, but directly obtains a decision result based on a value of the idle forwarding capability calculated in step 1 and a value of the window adjustment request (or the rate adjustment request) in step 2, where the decision result is carried in the packet, and the decision result indicates the transmitting device to adjust the sending window (or the sending rate). The decision result includes the following three cases: 1. Grant information is used as the decision result, to indicate that the transmitting device is granted to increase the sending window (or the sending rate). 2. Rejection information is used as the decision result, to indicate that the transmitting device is rejected to adjust the sending window (or the sending rate). 3. The packet is marked with the preset mark, and marked information is used as the decision result, to indicate to decrease the sending window (or the sending rate) of the transmitting device.

Step 4: After the packet carrying the decision result arrives at a receiving device, the receiving device parses out the decision result, includes the decision result in an acknowledgment packet, and returns the acknowledgment packet to the transmitting device.

Step 5: After receiving the acknowledgment packet, the transmitting device parses out the decision result carried in the acknowledgment packet, and adjusts the sending window (or the sending rate) based on the decision result. An adjustment manner includes: increasing the sending window (or the sending rate), not increasing or decreasing the sending window (or the sending rate), or decreasing the sending window (or the sending rate).

It should be noted that, regardless of the steps in the overall procedure corresponding to FIG. 2 or the steps in the overall procedure corresponding to FIG. 3, there is no execution sequence between step 1 and step 2. Step 1 may be performed before step 2, step 2 may be performed before step 1, or step 1 and step 2 may be performed simultaneously. This is not specifically limited herein.

In conclusion, differences between the steps in the overall procedure corresponding to FIG. 2 and the steps in the overall procedure corresponding to FIG. 3 lie only in that: (I) In FIG. 3, there are a plurality of network devices on the path between the transmitting device and the receiving device. Therefore, each network device needs to determine whether a received packet from a previous-hop device has the preset mark. However, in FIG. 2, there is only one network device on the path between the transmitting device and the receiving device. Therefore, a packet received by the network device is directly from the transmitting device, and the packet does not have the preset mark. In this way, whether the packet has the preset mark does not need to be determined. (II) The current network device in FIG. 3 may overwrite a decision result (if any) carried in a packet sent by the previous-hop device. In FIG. 2, there is only one current network device, and the decision result is written by the current network device. Therefore, no overwriting occurs.

It should be noted herein that, in embodiments of this application, because the network device may alternatively be the transmitting device or the receiving device, when the network device is used as the transmitting device, corresponding to FIG. 2 or FIG. 3, the steps performed by the network device and the steps performed by the transmitting device are essentially performed by one combined device. For specific execution steps, refer to the network device and the transmitting device that correspond to FIG. 2 or FIG. 3. Details are not described herein. When the network device is used as the receiving device, corresponding to FIG. 2 or FIG. 3, the steps performed by the network device and the steps performed by the receiving device are essentially performed by one combined device. For specific execution steps, refer to the network device and the receiving device that correspond to FIG. 2 or FIG. 3. Details are not described herein.

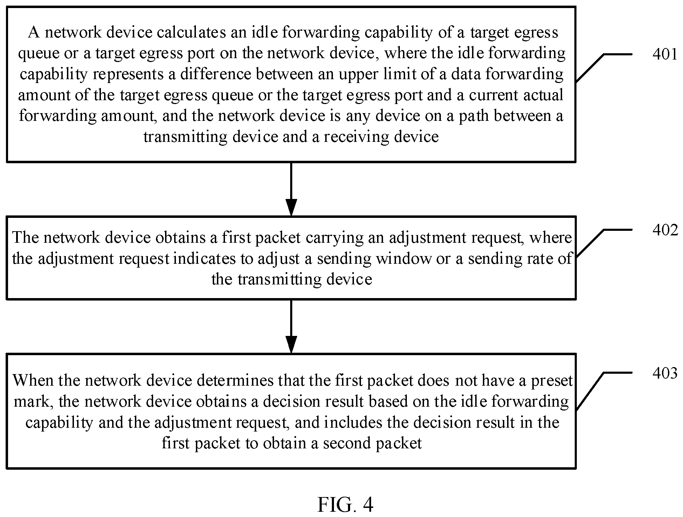

With reference to the foregoing descriptions of the system architectures and the overall procedures, the following starts to describe an active queue management method that is for a network device and that is provided in embodiments of this application. For details, refer to FIG. 4. FIG. 4 is a schematic flowchart of an active queue management method for a network device according to an embodiment of this application. The method may specifically include the following steps.

401: The network device calculates an idle forwarding capability of a target egress queue or a target egress port on the network device, where the idle forwarding capability represents a difference between an upper limit of a data forwarding amount of the target egress queue or the target egress port and a current actual forwarding amount, and the network device is any device on a path between a transmitting device and a receiving device.

First, the network device calculates the idle forwarding capability of the target egress queue or the target egress port on the network device, where the idle forwarding capability represents a difference between an upper limit of a data forwarding amount of the target egress queue (including one or more egress queues) or the target egress port (including one or more egress ports) on the network device and the current actual forwarding amount, and may specifically represent a difference between an upper limit of a data forwarding amount of the target egress queue (including one or more egress queues) or the target egress port (including one or more egress ports) on the network device in preset duration (for example, 200 μs) and the current actual forwarding amount. The preset duration may be set by the network device. The network device is any device (including the transmitting device and the receiving device) on the path between the transmitting device and the receiving device.

It should be noted that, in some implementations of this application, a calculation process in which the network device calculates the idle forwarding capability of the target egress queue or the target egress port on the network device may be periodic calculation. For example, calculation is performed once at an interval of duration $\tau$ (where in this case, $\tau$ is periodicity duration). The calculation process may alternatively be non-periodic calculation. For example, calculation is performed once at an interval of duration $\tau 1$ for the first time, calculation is performed once at an interval of duration $\tau 2$ for the second time, and so on. The calculation process is not specifically limited in this application. For ease of description, in the following embodiments, the network device periodically calculates the idle forwarding capability of the target egress queue or the target egress port on the network device based on preset duration $\tau$.

It should be further noted that, in some implementations of this application, the process in which the network device calculates the idle forwarding capability of the target egress queue or the target egress port on the network device specifically includes but is not limited to the following:

(a). The network device calculates a value of a credit counter (credit counter, CC) based on an upper limit (which may be represented by $B*\tau$, where B is a link bandwidth) of a data forwarding amount of the target egress queue or the target egress port in the preset duration $\tau$ and a total amount (which may be represented by TxSize) of data passing through the target egress queue or the target egress port in the preset duration $\tau$, where the value (which may be represented by CC) of the credit counter represents a value of the idle forwarding capability.

(b). The network device calculates the value of the credit counter based on the upper limit $B*\tau$ of the data forwarding amount of the target egress queue or the target egress port in the preset duration $\tau$, the total amount TxSize of the data passing through the target egress queue or the target egress port in the preset duration $\tau$, and a current egress queue depth, where the current egress queue depth is a depth of the target egress queue or a depth of an egress queue corresponding to the target egress port, and may be represented by q. It should be noted that, in this embodiment of this application, q may refer to a sum of all current egress queue depths, a largest one of all the current egress queue depths, or (one or more) current egress queue depths greater than a preset threshold. A meaning represented by q is not specifically limited in this application. For ease of description, q in the following embodiments represents the sum of the current egress queue depths.

Details are not described subsequently.

(c). The network device calculates the value of the credit counter based on the upper limit $B*\tau$ of the data forwarding amount of the target egress queue or the target egress port in the preset duration $\tau$, the total amount TxSize of the data passing through the target egress queue or the target egress port in the preset duration $\tau$, the current egress queue depth q, and a preset queue depth (which may be represented by Qt). It should be noted that, in this embodiment of this application, the preset queue depth Qt is a user-defined value. For example, Qt may be a specific value, for example, 0 KB, 10 KB, or 20 KB, based on an actual requirement. This is not specifically limited in this application. For example, when the preset queue depth Qt is set to 0 KB, it indicates that the queue depth of the target egress queue or the depth of the egress queue corresponding to the target egress port needs to be maintained at 0. In this way, an extremely low queuing latency can be achieved.

In conclusion, a difference between the foregoing three manners of calculating the idle forwarding capability of the target egress queue or the target egress port on the network device lies in that: In the manner (a), the idle forwarding capability of the target egress queue or the target egress port on the network device is calculated based on two parameters, and a small quantity of parameters are involved. This is convenient for implementation. In the manner (b), the idle forwarding capability of the target egress queue or the target egress port on the network device is calculated based on three parameters. This improves accuracy of calculating the value of the credit counter. In the manner (c), the idle forwarding capability of the target egress queue or the target egress port on the network device is calculated based on four parameters, and the preset queue depth Qt is additionally introduced, so that the egress queue depth on the network device can be controlled at a specified depth value, thereby reducing a queuing latency and enabling the queue depth to be unbound from a quantity of flows. For ease of description, the manner (c) is used as an example in the following embodiments to show the process of calculating the idle forwarding capability of the target egress queue or the target egress port on the network device.

It should be noted herein that, the current egress queue depth is the depth of the target egress queue or the depth of the egress queue corresponding to the target egress port, and the sum of the current egress queue depths is a sum of depths of the target egress queue or a sum of depths of egress queues corresponding to the target egress port. The sum of the current egress queue depths may be a sum of instantaneous depths of current egress queues, or may be an averaged sum of the current egress queue depths in preset duration T. This is not specifically limited in this application.

For ease of understanding the sum of the instantaneous depths of the current queues, the averaged sum of the current queue depths, a largest instantaneous depth of the current queues, and a largest average depth of the current queues, the following provides examples for illustration.

(1) Sum of the instantaneous depths of the current queues

a. In a case in which the sum of the current egress queue depths is the sum of the depths of the target egress queue. It is assumed that the target egress queue includes an egress queue 1, an egress queue 2, and an egress queue 3, and at a current moment $t_0$, queue depths of the egress queue 1, the egress queue 2, and the egress queue 3 are respectively $L_1$, $L_2$, and $L_3$. In this case, a sum $L_{all}$ of instantaneous depths of the current queues at the current moment $t_0$ is $L_{all}=L_1+L_2+L_3$.

b. In a case in which the sum of the current egress queue depths is the sum of the depths of the target egress port. It is assumed that the target egress port includes an egress port 1 and an egress port 2, the egress port 1 corresponds to an egress queue 1 and an egress queue 2, the egress port 2 corresponds to an egress queue 3, an egress queue 4, and an egress queue 5, and at a current moment $t_0$, queue depths of the egress queue 1, the egress queue 2, the egress queue 3, the egress queue 4, and the egress queue 5 are respectively $L_1$, $L_2$, $L_3$, $L_4$, and $L_5$. In this case, a sum $L_{all}$ of instantaneous depths of the current queues at the current moment $t_0$ is $L_{all}=L_1+L_2+L_3+L_4+L_5$.

(2) Averaged sum of the current queue depths

a. In a case in which the sum of the current egress queue depths is the sum of the depths of the target egress queue. It is assumed that the target egress queue includes an egress queue 1, an egress queue 2, and an egress queue 3, and instantaneous queue depths of the egress queue 1, the egress queue 2, and the egress queue 3 are recorded at intervals in the preset duration T, and it is assumed that the instantaneous queue depths of the egress queue 1, the egress queue 2, and the egress queue 3 each are recorded for three times in the preset duration T, and are respectively $L_{11}$, $L_{12}$, $L_{13}$, $L_{21}$, $L_{22}$, $L_{23}$, $L_{31}$, $L_{32}$, and $L_{33}$. In this case, an averaged sum of the current queue depths is $L_{arv}=(L_{11}+L_{12}+L_{13}+L_{21}+L_{22}+L_{23}+L_{31}+L_{32}+L_{33})\div 3$, where the denominator "3" is a quantity of times that an instantaneous queue depth of each egress queue is recorded in the preset duration T.

b. In a case in which the sum of the current egress queue depths is the sum of the depths of the target egress port, calculating an averaged sum of the current queue depths is similar to the foregoing description. Details are not described herein.

(3) Largest instantaneous depth of the current queues

a. In a case in which the current egress queue depth is the depth of the target egress queue, it is assumed that the target egress queue includes an egress queue 1, an egress queue 2, and an egress queue 3, and at a current moment $t_0$, queue depths of the egress queue 1, the egress queue 2, and the egress queue 3 are respectively $L_1$, $L_2$, and $L_3$, where $L_1 > L_2$, and $L_1 > L_3$. It indicates that $L_1$ is the largest one of the current queue depths $L_1$, $L_2$, and $L_3$. In this case, a largest instantaneous depth of the current queues at the current moment $t_0$ is $L_1$.

b. In a case in which the current egress queue depth is the depth of the target egress port, it is assumed that the target egress port includes an egress port 1 and an egress port 2, the egress port 1 corresponds to an egress queue 1 and an egress queue 2, the egress port 2 corresponds to an egress queue 3, an egress queue 4, and an egress queue 5, and at a current moment $t_0$, queue depths of the egress queue 1, the egress queue 2, the egress queue 3, the egress queue 4, and the egress queue 5 are respectively $L_1$, $L_2$, $L_3$, $L_4$, and $L_5$. In addition, $L_3$ is the largest one of the current queue depths $L_1$, $L_2$, $L_3$, $L_4$, and $L_5$. In this case, a largest instantaneous depth of the current queues at the current moment $t_0$ is $L_3$.

(4) Largest average depths of the current queues

a. In a case in which the current egress queue depth is the depth of the target egress queue, it is assumed that the target egress queue includes an egress queue 1, an egress queue 2, and an egress queue 3, and instantaneous queue depths of the egress queue 1, the egress queue 2, and the egress queue 3 are recorded at intervals in the preset duration T, and it is assumed that the instantaneous queue depths of the egress queue 1, the egress queue 2, and the egress queue 3 each are recorded for three times in the preset duration T, and are respectively $L_{11}$, $L_{12}$, $L_{13}$, $L_{21}$, $L_{22}$, $L_{23}$, $L_{31}$, $L_{32}$, and $L_{33}$. Average current queue depths recorded for all times are respectively $L_{avg1} = (L_{11} + L_{12} + L_{13}) \div 3$, $L_{avg2} = (L_{21} + L_{22} + L_{23}) \div 3$, and $L_{avg3} = (L_{31} + L_{32} + L_{33}) \div 3$, where $L_{avg1} > L_{avg2}$, and $L_{avg1} > L_{avg3}$. It indicates that $L_{avg1}$ is the largest one of the average current queue depths $L_{avg1}$, $L_{avg2}$, and $L_{avg3}$. In this case, a largest average depth of the current queues at a current moment $t_0$ is $L_{avg1}$, where the denominator "3" is a quantity of times that an instantaneous queue depth of each egress queue is recorded in the preset duration T.

b. In a case in which the current egress queue depth is the depth of the target egress port, calculating a largest average depth of the current queues is similar to the foregoing description. Details are not described herein.

It should be further noted that, a specific implementation in which the network device calculates the value of the CC based on the sum q of the current egress queue depths, the upper limit $B*\tau$ of the data forwarding amount of the target egress queue or the target egress port in the preset duration $\tau$, the total amount TxSize of the data passing through the target egress queue or the target egress port in the preset duration $\tau$, and the preset queue depth Qt includes but is not limited to the following manners.

A. When a byte is used as a unit, a CC calculation manner may be shown in the following formula (2):

$$CC = \lambda * (B * \tau - TxSize + Q_t - q) \tag{2}$$

In this embodiment of this application, when the CC is updated, the following operations may further be performed:

TxSize=0
DC=0
CreditAllocated=0

$\lambda$ is a coefficient, and $0 < \lambda \leq 1$. It should be noted herein that, TxSize is specifically a total amount of data passing through the target egress queue or the target egress port in a time range of previous preset duration $\tau$.

B. When a rate is used as a unit, a CC calculation manner may be shown in the following formula (3):

$$CC = \lambda * (B * \tau - TxSize + Q_t - q)/\tau \tag{3}$$

In this embodiment of this application, when the CC is updated, the following operations are further performed:

TxSize=0
DC=0

CreditAllocated=0

A difference between the formula (3) and the formula (2) lies in that the formula (3) is obtained by dividing the formula (2) by the preset duration $\tau$. In addition, in the foregoing implementation of this application, several implementations in which the network device calculates the value of the CC based on the sum q of the current egress queue depths, the upper limit B*$\tau$ of the data forwarding amount of the target egress queue or the target egress port in the preset duration $\tau$, the total amount TxSize of the data passing through the target egress queue or the target egress port in the preset duration $\tau$, and the preset queue depth Qt are specifically described. This implementation is flexible. In addition, complexity of the several provided algorithms is low, and a plurality of multiplication and division operations are not involved, thereby reducing storage overheads.

It should be further noted that, in some other implementations of this application, in addition to calculating, by the network device, the value of the CC based on parameters in the four dimensions: the sum q of the current egress queue depths, the upper limit B*$\tau$ of the data forwarding amount of the target egress queue or the target egress port in the preset duration $\tau$, the total amount TxSize of the data passing through the target egress queue or the target egress port in the preset duration $\tau$, and the preset queue depth Qt (or calculating the value of the CC based on the two parameters in the foregoing manner (a) or the three parameters in the foregoing manner (b), which is not limited herein), more parameters may be added on the basis of the parameters in the four dimensions to calculate the value of the CC more accurately. For example, a sum of credit counters allocated to a packet in the preset duration from a previous CC update moment to a current CC update moment is counted. During current CC update, the sum is subtracted from the value, or the sum is multiplied by $\lambda$.. A manner of subtracting the sum is not limited. In this case, an operation corresponding to the optimization is CreditAllocated=CreditAllocated+II (when CC>II), where CreditAllocated indicates a sum of credit counters allocated in a periodicity. If a first packet is a marked packet, the optimization further brings another operation, that is, CreditAllocated=CreditAllocated-$\beta$.

402: The network device obtains the first packet carrying an adjustment request, where the adjustment request indicates to adjust a sending window or a sending rate of the transmitting device.

In addition to calculating the idle forwarding capability of the target egress queue or the target egress port on the network device, the network device also obtains a packet carrying the adjustment request, where the packet may be referred to as the first packet, and the adjustment request may be a window adjustment request or a rate adjustment request. The window adjustment request indicates to adjust the sending window of the transmitting device, and the rate adjustment request indicates to adjust the sending rate of the transmitting device.

It should be noted that, in this embodiment of this application, a manner in which the network device obtains the first packet carrying the adjustment request includes but is not limited to the following: (I) When the network device is the transmitting device, the first packet is generated by the transmitting device (where in this case, the generated first packet is an initial packet and does not have a preset mark), and the transmitting device includes the adjustment request in the first packet. Then, the transmitting device obtains a decision result based on a value II of the adjustment request and an obtained value of the idle forwarding capability, and obtains a second packet by including the decision result in the first packet, to subsequently send the second packet to a next-hop device. It should be noted herein that, in some implementations of this application, when the network device is the transmitting device, the transmitting device may alternatively not include the adjustment request in the first packet (where in this case, the generated first packet is an initial packet and does not have a preset mark), but directly obtains a decision result based on a value II of the adjustment request and an obtained value of the idle forwarding capability after obtaining the value of the idle forwarding capability through calculation based on step 401, and then obtains a second packet by including the decision result in the first packet, to subsequently send the second packet to a next-hop device. (II) When the network device is not the transmitting device, the network device receives the first packet sent by a previous-hop device (which may be the transmitting device, or may be another device after the transmitting device).

It should be noted that, in this embodiment of this application, there is no execution sequence between step 401 and step 402. Step 401 may be performed before step 402, step 402 may be performed before step 401, or step 401 and step 402 may be performed simultaneously. This is not specifically limited herein.

403: When the network device determines that the first packet does not have the preset mark, the network device obtains the decision result based on the idle forwarding capability and the adjustment request, and obtains a second packet by including the decision result in the first packet.

After obtaining the first packet, the network device first determines whether the first packet has the preset mark. When the network device determines that the first packet does not have the preset mark, the network device obtains the decision result based on the value of the idle forwarding capability and the value of the adjustment request (where the value of the adjustment request is represented by II), and obtains a second packet by including the decision result in the first packet. Specifically, the network device obtains the decision result by comparing the value of the idle forwarding capability with the value II of the adjustment request. Therefore, in a process of comparing the values, a unit of the value of the idle forwarding capability needs to be consistent with a unit of the value II of the adjustment request. If the units are inconsistent, the network device further needs to convert the units of the two values, to enable the units of the two values to be consistent.

When the first packet does not have the preset mark, a specific process of how the network device obtains the decision result by comparing the value of the idle forwarding capability with the value II of the adjustment request (on a premise that the units of the two values are consistent) is described below.

(1) If the first packet does not have the preset mark, and the value of the idle forwarding capability is greater than or equal to the value II of the adjustment request, grant information is used as the decision result.

When the first packet does not have the preset mark, and the network device determines, by comparing the value of the idle forwarding capability with the value II of the adjustment request, that the value of the idle forwarding capability is greater than or equal to the value II of the adjustment request, the decision result obtained by the network device is "grant", that is, the grant information is used as the decision result (namely, the decision result in the foregoing case 1), where the grant information represents that the transmitting device is allowed to increase the sending window or the sending rate.

It should be noted that, in some other implementations of this application, when the first packet does not have the preset mark, and the network device determines, by comparing the value of the idle forwarding capability with the value II of the adjustment request, that the value of the idle forwarding capability is greater than or equal to the value II of the adjustment request, the network device may further subtract the value II of the adjustment request from the current value of the idle forwarding capability, to obtain a new value of the idle forwarding capability. For example, the value of the idle forwarding capability is the value CC of the credit counter, that is, CC=CC-II.

As described in the foregoing implementation of this application, when the first packet does not have the preset mark, and the value of the idle forwarding capability is greater than or equal to the value II of the adjustment request, the decision result of the network device is the grant information. This implementation is feasible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability and II, and a corresponding decision result can be obtained only by performing a simple comparison operation. Therefore, the manner is easy to be implemented on a high-rate network device.

(2) If the first packet does not have the preset mark, and the value of the idle forwarding capability is greater than or equal to 0 and less than the value II of the adjustment request, the first packet is marked based on a preset probability.

When the first packet does not have the preset mark, and the network device determines, by comparing the value of the idle forwarding capability with the value II of the adjustment request, that the value of the idle forwarding capability is greater than or equal to 0 and less than the value II of the adjustment request, the network device marks the first packet based on the preset probability. Specifically, a manner in which the network device marks the first packet based on the preset probability may be marking the first packet based on a preset fixed probability p. Alternatively, a dynamic probability p' of a current round is obtained through calculation after each time it is determined that the value of the idle forwarding capability is greater than or equal to 0 and less than the value II of the adjustment request, and then, the first packet is marked based on the dynamic probability p'. This is not limited in this application.

It should be noted herein that, there are the following two results for marking the first packet based on the preset probability. Different results indicate different decision results obtained by the network device. Details are separately described below.

A. If the first packet is successfully marked with the preset mark by the network device based on the preset probability, marked information is used as the decision result.

When the first packet is successfully marked with the preset mark by the network device based on the preset probability, the network device uses, as the decision result, the marked information indicating that the first packet is marked with the preset mark. That is, the decision result obtained by the network device is "marked" (in other words, the decision result is the decision result in the foregoing case 3) T, and the marked information represents that the transmitting device is allowed to decrease the sending window or the sending rate.

Similarly, it should be noted that, in some other implementations of this application, when the first packet does not have the preset mark, and the network device determines, by comparing the value of the idle forwarding capability with the value II of the adjustment request, that the value of the idle forwarding capability is greater than or equal to 0 and less than the value II of the adjustment request, the network device may further add a target preset value (which may be represented by β) to a value of a deficit counter (deficit counter, DC) corresponding to the idle forwarding capability, to obtain a new value of the deficit counter (where the value of the deficit counter may be represented by DC), that is, DC=DC+β. It should be noted herein that, the DC is in one-to-one correspondence with the value of the idle forwarding capability, and one value of the idle forwarding capability corresponds to one DC.

As described in the foregoing implementation of this application, when the first packet does not have the preset mark, and the value of the idle forwarding capability is greater than or equal to 0 and less than the value II of the adjustment request, the network device needs to mark the first packet based on the preset probability. If the first packet is successfully marked with the preset mark, the decision result determined by the network device is the marked information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability, DC, and II, and a corresponding decision result can be obtained only by performing a simple comparison operation. Therefore, the manner is easy to be implemented on a high-rate network device.

B. If the first packet is not marked with the preset mark by the network device based on the preset probability, a value DC of a deficit counter is compared with the value II of the adjustment request.

When the first packet is not marked with the preset mark by the network device based on the preset probability, the network device further compares the value DC of the deficit counter corresponding to the idle forwarding capability with the value II of the adjustment request (on the premise that units of the two values are consistent), and then obtains a specific decision result based on a comparison result. Similarly, it should be noted herein that, different comparison results indicate different decision results obtained by the network device. Details are separately described below.

a. If the value DC of the deficit counter is greater than or equal to the value II of the adjustment request, grant information is used as the decision result.

When the value DC of the deficit counter corresponding to the idle forwarding capability is greater than or equal to the value II of the adjustment request, the decision result obtained by the network device is "grant", that is, the grant information is used as the decision result (namely, the decision result in the foregoing case 1) T, where the grant information represents that the transmitting device is allowed to increase the sending window or the sending rate.

It should be noted that, in some other implementations of this application, when the first packet is not marked with the preset mark by the network device based on the preset probability, and the network device determines, by comparing the value DC of the deficit counter with the value II of the adjustment request, that the value DC of the deficit counter is greater than or equal to the value II of the adjustment request, the network device may further subtract the value II of the adjustment request from the current value DC of the deficit counter, to obtain a new value DC of the deficit counter, that is, DC=DC-II.

As described in the foregoing implementation of this application, when the first packet does not have the preset mark, and the value of the idle forwarding capability is greater than 0 and less than the value II of the adjustment request, the network device needs to mark the first packet based on the preset probability. If the first packet is not marked with the preset mark, the network device further needs to compare the value DC of the deficit counter with the value II of the adjustment request, and when the value DC of the deficit counter is greater than or equal to the value II of the adjustment request, the decision result determined by the network device is the grant information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability, DC, and II, and a corresponding decision result can be obtained only by performing a simple comparison operation. Therefore, the manner is easy to be implemented on a high-rate network device.

b. If the value DC of the deficit counter is less than the value II of the adjustment request, rejection information is used as the decision result.

When the value DC of the deficit counter corresponding to the idle forwarding capability is less than the value II of the adjustment request, the decision result obtained by the network device is "rejection", that is, the rejection information is used as the decision result (namely, the decision result in the foregoing case 2), where the rejection information represents that the transmitting device is not allowed to adjust the sending window or the sending rate.

(3) When the first packet does not have the preset mark, the value of the idle forwarding capability is less than 0.

When the first packet does not have the preset mark, and the network device determines, by comparing the value of the idle forwarding capability with the value II of the adjustment request, that the value of the idle forwarding capability is less than 0, the network device marks the preset mark on the first packet, and uses, as the decision result, marked information indicating that the first packet is marked with the preset mark. That is, the decision result obtained by the network device is "marked" (in other words, the decision result is the decision result in the foregoing case 3), and the marked information represents that the transmitting device is allowed to decrease the sending window or the sending rate.

As described in the foregoing implementation of this application, when the first packet does not have the preset mark, and the value of the idle forwarding capability is less than 0, the network device marks the first packet, and determines that the decision result is the marked information. In this way, when different conditions are met, different decision results are obtained. This implementation is flexible. In addition, compared with a manner, in an existing solution, in which all packets in a previous periodicity have a same increase rate/decrease rate value (where the increase rate/decrease rate value needs to be obtained through complex calculation on the network device, and the complex calculation is difficult to be implemented on the network device), all decision results obtained in the manner in this application are determined based on a relationship between the value of the idle forwarding capability and II, and a corresponding decision result can be obtained only by performing a simple comparison operation. Therefore, the manner is easy to be implemented on a high-rate network device.

The foregoing points (1), (2), and (3) describe how the network device obtains the decision result based on the idle forwarding capability and the adjustment request when the first packet does not have the preset mark. In some other implementations of this application, after the network device obtains the first packet, if the network device obtains, by determining whether the first packet has the preset mark, that the first packet has the preset mark, the network device uses, as the decision result, the marked information indicating that the first packet is marked with the preset mark. That is, the decision result obtained by the network device is "marked" (in other words, the decision result is the decision result in the foregoing case 3), and the marked information represents that the transmitting device is allowed to decrease the sending window or the sending rate.

It should be noted that, when the network device determines that the first packet has the preset mark at the beginning, the network device may further add a target preset value β to the value of the idle forwarding capability, to obtain a new value of the idle forwarding capability. For example, the value of the idle forwarding capability is CC, that is, CC=CC+β.

As described in the foregoing implementation of this application, when the first packet has the preset mark, the network device does not need to compare the value of the idle forwarding capability with the value II of the adjustment request, but directly determines the marked information as the decision result. In this way, when different conditions are met, different decision results are obtained. This implementation is flexible.

It should be further noted that, in this embodiment of this application, the network device may be any device on the path between the transmitting device and the receiving device. In other words, in addition to a conventional network device (for example, a switch or a router), the network device may further be the transmitting device or the receiving device. Details are separately described in the following:

(1) The network device is any device (excluding the transmitting device and the receiving device) on the path between the transmitting device and the receiving device.

When the network device is any device (excluding the transmitting device and the receiving device) on the path between the transmitting device and the receiving device, that is, the network device is neither the transmitting device nor the receiving device, a manner in which the network device obtains the first packet carrying the adjustment request in step 402 is that the network device receives the first packet sent by a previous-hop device (which may be the transmitting device, or may be another device after the transmitting device). The network device is not the receiving device, and it means that the network device is not a last-hop device. Therefore, in some implementations of this application, after step 403, the network device may further send the obtained second packet (namely, the first packet carrying the decision result) to a next-hop device.

It should be noted herein that, if the next-hop device of the network device is the receiving device, after receiving the second packet sent by the network device, the receiving device parses the second packet, includes the decision result in an acknowledgment packet, and sends the acknowledgment packet to the transmitting device (where a path through which the receiving device returns the acknowledgment packet to the transmitting device is not limited to the original path), where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet.

(2) The network device is the transmitting device.

When the network device is the transmitting device, there are two processing manners herein: (I) The transmitting device performs the step performed by the network device in step 402. To be specific, the first packet is generated by the transmitting device (where in this case, the generated first packet is an initial packet and does not have the preset mark), and the transmitting device includes the adjustment request in the first packet. Then, the transmitting device obtains the decision result based on the value II of the adjustment request and the obtained value of the idle forwarding capability, and then obtains a second packet by including the decision result in the first packet, to subsequently send the second packet to a next-hop device. (II) The transmitting device does not perform the step performed by the network device in step 402. To be specific, the transmitting device may alternatively not include the adjustment request in the first packet (where in this case, the generated first packet is an initial packet and does not have the preset mark), but directly obtains the decision result based on the value II of the adjustment request and the obtained value of the idle forwarding capability after obtaining the value of the idle forwarding capability through calculation based on step 401, and then obtains a second packet by including the decision result in the first packet, to subsequently send the second packet to a next-hop device.

Similarly, the transmitting device is not a last-hop device. Therefore, in some implementations of this application, after step 403, the transmitting device may further send the obtained second packet (namely, the first packet carrying the decision result) to the next-hop device.

Similarly, it should be noted that, if the next-hop device of the transmitting device is the receiving device, after receiving the second packet sent by the transmitting device, the receiving device parses the second packet, includes the decision result in an acknowledgment packet, and sends the acknowledgment packet to the transmitting device (where a path through which the receiving device returns the acknowledgment packet to the transmitting device is not limited to the original path), where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet.

(3) The network device is the receiving device.

When the network device is the receiving device, there are also two processing manners herein: (I) The receiving device performs the step performed by the network device in step 403. To be specific, when the receiving device determines that the first packet does not have the preset mark, the receiving device obtains the decision result based on the idle forwarding capability and the adjustment request, and obtains a second packet by including the decision result in the first packet. Then, the receiving device parses the second packet, includes, in an acknowledgment packet, the decision result obtained through parsing, and sends the acknowledgment packet to the transmitting device, where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet. (II) The receiving device does not perform the step performed by the network device in step 403. Instead, when the receiving device determines that the first packet does not have the preset mark, the receiving device obtains the decision result based on the idle forwarding capability and the adjustment request, where the decision result is not carried in the first packet, but is directly carried in an acknowledgment packet; and sends the acknowledgment packet to the transmitting device, where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet.

It should be noted that, in the foregoing implementation of this application, there are the following three cases of the decision result: 1. Grant information is used as the decision result, to indicate that the transmitting device is granted to increase the sending window (or the sending rate). 2. Rejection information is used as the decision result, to indicate that the transmitting device is rejected to increase the sending window (or the sending rate). 3. If the packet is marked with the preset mark (regardless of whether the packet is marked by a previous network device or the packet is marked by the network device), marked information is used as the decision result, to indicate to decrease the sending window (or the sending rate) of the transmitting device. Therefore, after receiving the acknowledgment packet sent by the receiving device, the transmitting device adjusts the sending window (or the sending rate) of the transmitting device in different manners based on different decision results carried in the acknowledgment packet. The manners include but are not limited to the following:

a. If the decision result is the marked information, the acknowledgment packet specifically indicates the transmitting device to decrease the sending window or the sending rate of the transmitting device based on the decision result, where a decrease amplitude is obtained based on a target preset value $\beta$. For example, the sending window or the sending rate of the transmitting device may be decreased by $\beta$ on an original basis, or the sending window or the sending rate of the transmitting device may be decreased by $k_1 * \beta$ on an original basis, where $k_1$ is a user-defined parameter, and $k_1 > 0$.

b. If the decision result is the grant information, the acknowledgment packet specifically indicates the transmitting device to increase the sending window or the sending rate of the transmitting device based on the decision result, where an increase amplitude is obtained based on the value II of the adjustment request. For example, the sending window or the sending rate of the transmitting device may be increased by II on an original basis, or the sending window or the sending rate of the transmitting device may be increased by $k_2$*II on an original basis, where $k_2$ is a user-defined parameter, and $k_2>0$.

c. If the decision result is the rejection information, the acknowledgment packet specifically indicates the transmitting device not to increase or decrease the sending window or the sending rate of the transmitting device based on the decision result.

As described in the foregoing implementation of this application, different decision results carried in the acknowledgment packet indicate different manners in which the transmitting device adjusts the sending window and the sending rate based on the acknowledgment packet. Adjustment logic is simple and easy to implement, and has selectivity.

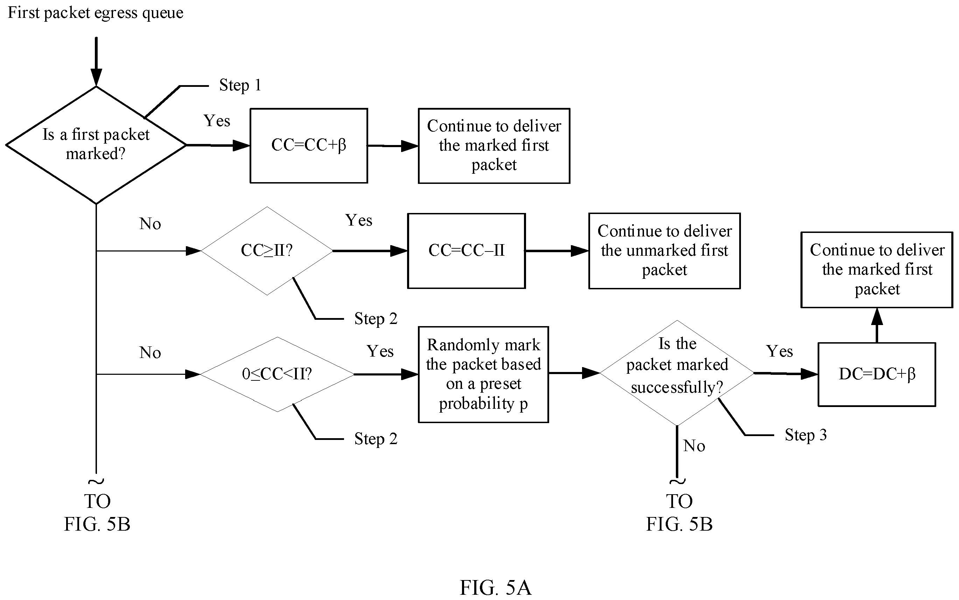

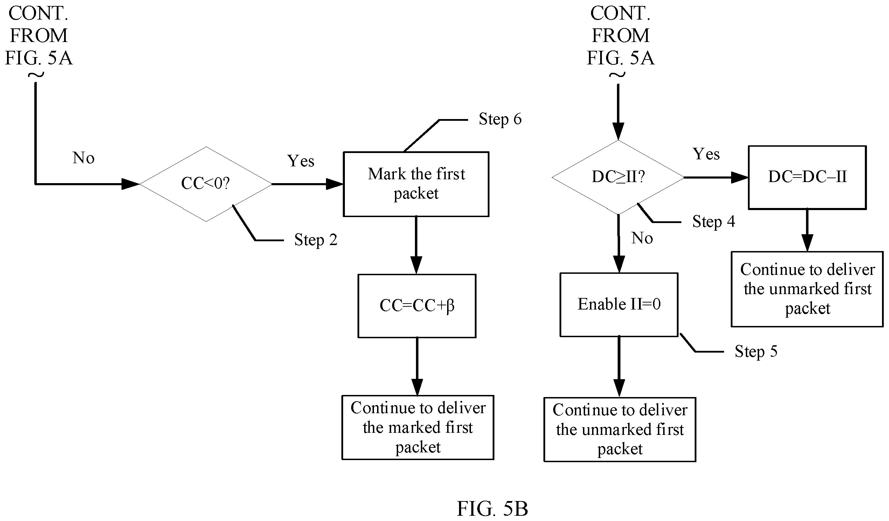

In embodiments of this application, to further understand logic of step 403, the following uses an example in which the idle forwarding capability is CC to show a process of obtaining different decision results based on different comparison results. For details, refer to FIG. 5A and FIG. 5B. FIG. 5A and FIG. 5B are another schematic flowchart of an active queue management method for a network device according to an embodiment of this application. When the network device obtains a first packet, the network device performs the following operations.

Step 1: The network device determines whether the first packet is marked with a preset mark. If the first packet is marked with the preset mark, marked information indicating that the first packet has the preset mark is a decision result, and the network device adds β (where β is a user-defined parameter, namely, the foregoing target preset value, and an empirical value is usually increased by an amplitude of 0.5*a maximum transmission unit (maximum transmission unit, MTU)) to CC, to obtain new CC, that is, CC=CC+β. If the network device is not a receiving device, the network device further sends the first packet to a next-hop device on a path between a transmitting device and the receiving device. If the network device is a receiving device, the network device uses the marked information as the decision result, and includes the decision result in a generated acknowledgment packet. If the first packet is not marked with the preset mark, step 2 is performed.

Step 2: The network device determines a relationship between a value CC of a credit counter and a value II of an adjustment request carried in the first packet. If CC≥II, the network device uses grant information as the decision result of the network device, includes the decision result in the first packet, and subtracts II from CC, to obtain new CC (that is, CC=CC-II). If the network device is not the receiving device, the network device further sends, to the next-hop device on the path between the transmitting device and the receiving device, the first packet (namely, the second packet in the embodiment corresponding to FIG. 4) carrying the decision result. If the network device is the receiving device, the network device includes the decision result in the generated acknowledgment packet. If 0≤CC<II, step 3 is performed. If CC<0, step 6 is performed.

Step 3: The network device marks the first packet based on a preset probability (where the preset probability is a user-defined parameter, and if the preset probability is a fixed probability p, an empirical value is usually 0.1 to 0.2; or if the preset probability is a dynamic probability p', the network device performs calculation each time). If the first packet is successfully marked with the preset mark, the marked information indicating that the first packet has the preset mark is the decision result, and the network device adds β to DC corresponding to CC, to obtain new DC, that is, DC=DC+β. If the network device is not the receiving device, the network device further sends, to the next-hop device on the path between the transmitting device and the receiving device, the first packet having the preset mark. If the network device is the receiving device, the network device uses the marked information as the decision result, and includes the decision result in the generated acknowledgment packet. If the first packet is not marked with the preset mark based on the preset probability, step 4 is performed.

Step 4: The network device compares a relationship between DC and II, and if DC≥II, the network device uses the grant information as the decision result of the network device, includes the decision result in the first packet, and subtracts II from DC, to obtain new DC (that is, DC=DC-II). If the network device is not the receiving device, the network device further sends, to the next-hop device on the path between the transmitting device and the receiving device, the first packet (namely, the second packet in the embodiment corresponding to FIG. 4) carrying the decision result. If the network device is the receiving device, the network device includes the decision result in the generated acknowledgment packet. If DC<II, step 5 is performed.

Step 5: The network device uses rejection information as the decision result of the network device, and includes the decision result in the first packet. If the network device is not the receiving device, the network device further sends, to the next-hop device on the path between the transmitting device and the receiving device, the first packet (namely, the second packet in the embodiment corresponding to FIG. 4) carrying the decision result. If the network device is the receiving device, the network device includes the decision result in the generated acknowledgment packet.

Step 6: The network device marks the first packet, where the marked information indicating that the first packet has the preset mark is the decision result. If the network device is not the receiving device, the network device further sends the first packet to the next-hop device on the path between the transmitting device and the receiving device. If the network device is the receiving device, the network device uses the marked information as the decision result, and includes the decision result in the generated acknowledgment packet.

It should be noted that, in the embodiment corresponding to FIG. 5A and FIG. 5B, it is described that the current network device obtains the decision result of the network device for the obtained first packet, and for the decision result a previous decision result included by a previous-hop device (if any) of the network device in the first packet is not considered. During actual application, assuming that the current network device is not the transmitting device, and the previous-hop device of the network device is not the transmitting device either, if the decision result determined by the previous-hop device is grant information or rejection information (that is, the decision result in the foregoing case 1 or 2), and the decision result may be overwritten by the current network device. If the decision result determined by the previous-hop device is that the first packet has the preset mark (that is, the decision result in the foregoing case 3), in other words, any previous network device marks the first packet with the preset mark, a subsequent network device can obtain only the decision result in the foregoing case 3. A specific overwriting rule is described above. Details are not described herein.

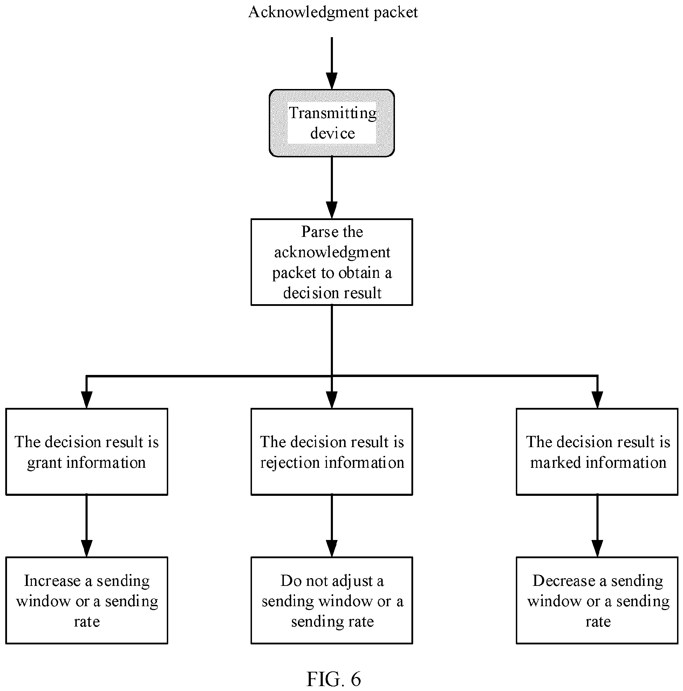

It should be further noted that, when receiving the acknowledgment packet returned by the receiving device, the transmitting device adjusts the sending window or the sending rate in different manners based on different decision results in the acknowledgment packet. For details, refer to FIG. 6. FIG. 6 is a schematic flowchart in which a transmitting device adjusts a sending window or a sending rate based on a decision result according to an embodiment of this application. It can be learned from FIG. 6 that, if a decision result is marked information, an acknowledgment packet specifically indicates the transmitting device to decrease the sending window or the sending rate of the transmitting device based on the decision result. If the decision result is grant information, an acknowledgment packet specifically indicates the transmitting device to increase the sending window or the sending rate of the transmitting device based on the decision result. If the decision result is rejection information, an acknowledgment packet specifically indicates the transmitting device not to adjust (to be specific, not to increase or decrease) the sending window or the sending rate of the transmitting device based on the decision result.

It should be further noted that, an active queue management method for a network device provided in embodiments of this application may be used to cooperate with a congestion control protocol, to control a queue depth at a specified depth. The following separately describes implementing a slow start algorithm and a linear additive increase multiplicative decrease (additive increase multiplicative decrease, AIMD) algorithm by using the active queue management method that is for the network device and that is provided in embodiments of this application.

(1) The slow start algorithm is implemented by using the active queue management method that is for the network device and that is provided in embodiments of this application.

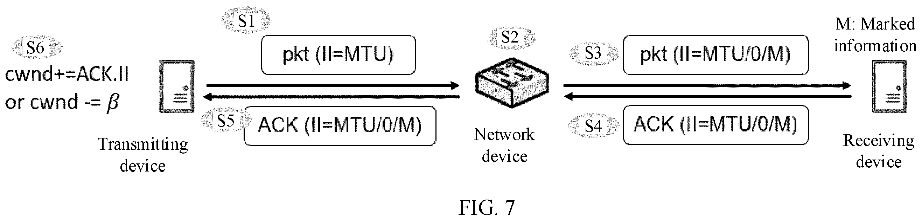

For details, refer to FIG. 7. FIG. 7 is a schematic diagram of a framework for implementing a slow start algorithm by using an active queue management method that is for a network device and that is provided in embodiments of this application according to an embodiment of this application. A characteristic of the slow start algorithm is that a value of a sending window is doubled every length of round-trip time (round trip time, RTT). Under the control of the algorithm, the window increases quickly to occupy an idle bandwidth quickly. To implement the algorithm, in each packet sent by a transmitting device, a value II of an adjustment request carried in the packet is set to MTU, as shown in step S 1 in FIG. 7. After the packet passes through the network device (where it is assumed that the network device does not include the transmitting device or a receiving device), the network device performs determining, as shown in step S2 in FIG. 7. As shown in step S3, after the determining, three decision results may be obtained: (I) II maintains at MTU (to be specific, the decision result is grant information). (II) II is changed to 0 (to be specific, the decision result is rejection information). (III) The packet is marked (to be specific, the decision result is marked information). The receiving device includes the decision result in the packet in an acknowledgment packet ACK, and returns the acknowledgment packet to the transmitting device, as shown in step S4 and step S5 in FIG. 7. It should be noted herein that, a return path of the acknowledgment packet ACK shown in FIG. 7 is the same as a sending path. During actual application, the return path is not limited to be consistent with the sending path. After the acknowledgment packet ACK arrives at the transmitting device, the transmitting device updates the window based on the decision result carried in the acknowledgment packet ACK, as shown in step S6 in FIG. 7. If the decision result carried in the acknowledgment packet ACK is not the marked information, the sending window is increased by the value II of the adjustment request. If the decision result carried in the acknowledgment packet ACK is the marked information, the transmitting device decreases the sending window by $\beta$.

It should be noted herein that, in this application, the sending window of the transmitting device is adjusted by using the slow start algorithm implemented by using the active queue management method that is for the network device and that is provided in embodiments of this application. In some other implementations of this application, the algorithm may alternatively be used to adjust a sending rate of the transmitting device. An adjustment manner is similar to a manner of adjusting the sending window. Details are not described herein.

(2) The AIMD algorithm is implemented by using the active queue management method that is for the network device and that is provided in embodiments of this application.

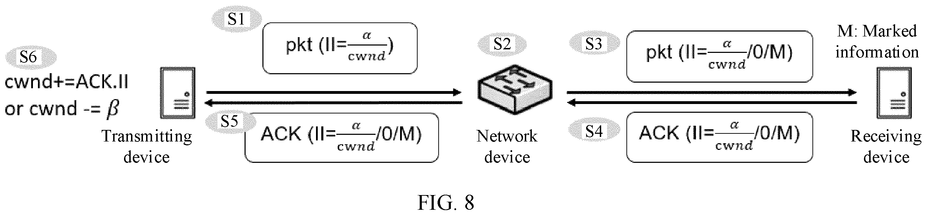

Based on the foregoing (1), when the network device determines that 0<CC<II, the network device may determine that a bandwidth is fully occupied. However, in this case, it may not be fair for a plurality of flows, that is, bandwidths are the same. Therefore, the AIMD algorithm may continue to be implemented based on the active queue management method that is for the network device and that is provided in embodiments of this application, to implement flow fairness. When the transmitting device is in the slow start algorithm, if in the acknowledgment packet ACK received by the transmitting device, II=0 (to be specific, the decision result is the rejection information), or the decision result in the acknowledgment packet ACK is the marked information, the transmitting device may also determine that a bottleneck link bandwidth is full (even congested), then exit from the slow start algorithm, and enter the AIMD algorithm. To implement the AIMD algorithm, II carried in the packet sent by the transmitting device is $\alpha$/cwnd, and other behaviors maintain unchanged, as shown in FIG. 8. The bandwidth of the network device is fully occupied, and 0<CC<II. Therefore, step 3 in the embodiment corresponding to FIG. 5A and FIG. 5B is performed. When II carried in the packet is set to $\alpha$/cwnd, the AIMD algorithm is implemented in this branch. After a plurality of iterations, throughputs of the plurality of flows can reach a same value.

In conclusion, the active queue management method that is for the network device and that is provided in embodiments of this application has the following beneficial effects.

(I) A queue depth on the network device may be stably maintained at a preset queue depth Qt. For example, Qt may be set to 0 KB, in other words, the queue depth is maintained at 0. In this way, an extremely low queuing latency can be obtained.

(II) The method may be used to for quickly increasing the window in a slow start algorithm. The method can enable a transmitting device to quickly and fully occupy a bandwidth when a link bandwidth is not full, and implementation logic is simple.

(III) When the bandwidth is full, the method may be used to implement an AIMD algorithm, to implement the fairness of the plurality of flows without losing the bandwidth, and implementation logic is simple.

(IV) The method is low in complexity and is easy to be implemented on a high-rate network device.

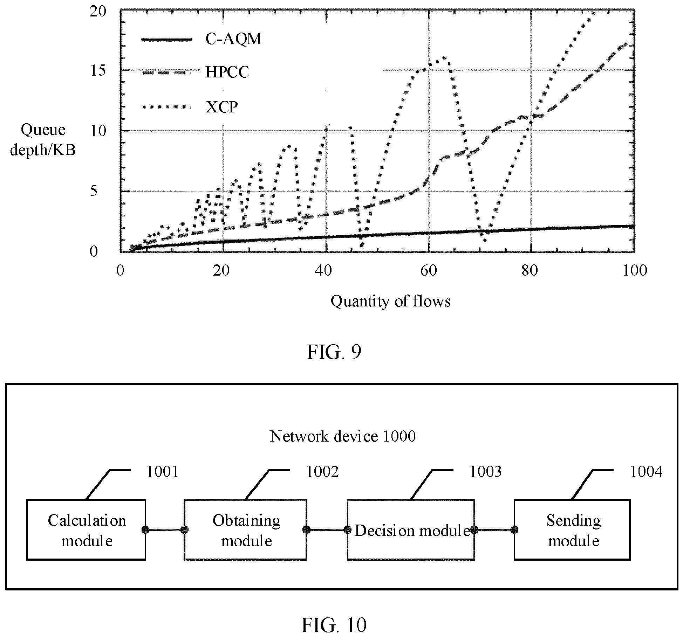

To have a more intuitive understanding of beneficial effects brought by embodiments of this application, the following further compares technical effects brought by embodiments of this application. In this application, a slow start algorithm implemented by using the active queue management method for the network device is used for comparison. In this application, a dumbbell topology is constructed on a simulation platform, and traffic is constructed to pass through a bottleneck link. A quantity of flows on the bottleneck link continues to be increased and a queue depth on the bottleneck link is observed. In this application, Qt is set to 0 KB. An obtained result is compared with a result in the conventional technology, as shown in FIG. 9. C-AQM is an algorithm in the method in embodiments of this application, and HCPP and XCP are algorithms in the conventional technology. It can be learned from an effect comparison diagram in FIG. 9 that, the result of XCP in the conventional technology is that an overall average queue depth increases significantly as a quantity of flows increases, but decreases in some intermediate flows. The result of HPCC in the conventional technology is that an average queue depth significantly increases with a quantity of flows. The result of C-AQM in embodiments of the present invention is that an average queue depth slightly increases with a quantity of flows. The reason why the queue depth is not strictly 0 KB is that a real-time queue depth actually fluctuates around 0 KB. When a queue underflow occurs, the actual queue depth is calculated as 0. Therefore, an actual average queue depth is greater than 0 KB. The reason why the average queue depth slightly increases with the quantity of flows is that jitter of a queue increases when the quantity of flows increases. As a result, an instantaneous queue depth increases, and the average queue depth also slightly increases.

Based on the foregoing embodiment, to better implement the foregoing solutions in embodiments of this application, the following further provides a related device configured to implement the foregoing solutions. For details, refer to FIG. 10. FIG. 10 is a schematic diagram of a network device according to an embodiment of this application. The network device 1000 may specifically include: a calculation module 1001, an obtaining module 1002, and a decision module 1003. The calculation module 1001 is configured to calculate an idle forwarding capability of a target egress queue or a target egress port on the network device 1000, where the idle forwarding capability represents a difference between an upper limit of a data forwarding amount of the target egress queue or the target egress port and a current actual forwarding amount, the target egress queue includes one or more egress queues, the target egress port includes one or more egress ports, and the network device 1000 is any device on a path between a transmitting device and a receiving device. The obtaining module 1002 is configured to obtain a first packet carrying an adjustment request, where the adjustment request includes a window adjustment request or a rate adjustment request, and the adjustment request indicates to adjust a sending window or a sending rate of the transmitting device. The decision module 1003 is configured to: when the network device 1000 determines that the first packet does not have a preset mark, obtain a decision result based on the idle forwarding capability and the adjustment request, and obtain a second packet by including the decision result in the first packet.

It should be noted herein that, when the network device is the transmitting device, there are two processing manners herein: (I) The obtaining module 1002 performs the step of "obtaining a first packet carrying an adjustment request". To be specific, the first packet is generated by the obtaining module 1002 (where in this case, the generated first packet is an initial packet and does not have the preset mark), and the obtaining module 1002 includes the adjustment request in the first packet. Then, the decision module 1003 obtains the decision result based on a value of the adjustment request and an obtained value of the idle forwarding capability, and then obtains a second packet by including the decision result in the first packet, to subsequently send the second packet to a next-hop device. (II) The obtaining module 1002 does not perform the step of "obtaining a first packet carrying an adjustment request". To be specific, the obtaining module 1002 may alternatively not include the adjustment request in the first packet (where in this case, the generated first packet is an initial packet and does not have the preset mark), and the obtaining module 1002 only generates the first packet, but directly obtains the decision result based on a value of the adjustment request and an obtained value of the idle forwarding capability after the decision module 1003 obtains the value of the idle forwarding capability through calculation. Then, the decision module 1003 obtains a second packet by including the decision result in the first packet, to subsequently send the second packet to a next-hop device.

In a possible design, the decision module 1003 is specifically configured to: when the network device 1000 determines that the value of the idle forwarding capability is greater than or equal to the value of the adjustment request, use grant information as the decision result, where the grant information represents that the transmitting device is allowed to increase the sending window or the sending rate of the transmitting device.

In a possible design, the decision module 1003 is specifically configured to: when the network device 1000 determines that the value of the idle forwarding capability is greater than zero and less than the value of the adjustment request, mark the first packet based on a preset probability; and when the network device 1000 determines that the first packet is marked with the preset mark, use, as the decision result, marked information indicating that the first packet has the preset mark, where the marked information represents that the transmitting device is allowed to decrease the sending window or the sending rate of the transmitting device.

In a possible design, the decision module 1003 is further configured to: when the network device 1000 determines that the first packet is not marked with the preset mark, and a value of a deficit counter corresponding to the idle forwarding capability is greater than or equal to the value of the adjustment request, use grant information as the decision result, where the grant information represents that the transmitting device is allowed to increase the sending window or the sending rate of the transmitting device.

In a possible design, the decision module 1003 is further configured to: when the network device 1000 determines that the first packet is not marked with the preset mark, and a value of a deficit counter corresponding to the idle forwarding capability is less than the value of the adjustment request, use rejection information as the decision result, where the rejection information represents that the transmitting device is not allowed to adjust the sending window or the sending rate of the transmitting device.

In a possible design, the decision module 1003 is further specifically configured to: when the network device 1000 determines that the value of the idle forwarding capability is less than zero, mark the preset mark on the first packet, and use, as the decision result, marked information indicating that the first packet has the preset mark, where the marked information represents that the transmitting device is allowed to decrease the sending window or the sending rate of the transmitting device.

In a possible design, the decision module 1003 is further configured to: when the network device 1000 determines that the first packet has the preset mark, use, as the decision result, the marked information indicating that the first packet has the preset mark, and obtain a second packet by including the decision result in the first packet, where the marked information represents that the transmitting device is allowed to decrease the sending window or the sending rate of the transmitting device.

In a possible design, the calculation module 1001 is specifically configured to calculate a value of a credit counter based on an upper limit of a data forwarding amount of the target egress queue or the target egress port in preset duration and a total amount of data passing through the target egress queue or the target egress port in the preset duration, where the value of the credit counter represents the value of the idle forwarding capability.

In a possible design, the calculation module 1001 is specifically configured to calculate the value of the credit counter based on the upper limit of the data forwarding amount of the target egress queue or the target egress port in the preset duration, the total amount of the data passing through the target egress queue or the target egress port in the preset duration, and a current egress queue depth, where the value of credit counter represents the value of the idle forwarding capability, and the current egress queue depth is a depth of the target egress queue or a depth of an egress queue corresponding to the target egress port.

In a possible design, the calculation module 1001 is specifically configured to calculate the value of the credit counter based on the upper limit of the data forwarding amount of the target egress queue or the target egress port in the preset duration, the total amount of the data passing through the target egress queue or the target egress port in the preset duration, the current egress queue depth, and a preset queue depth, where the value of the credit counter represents the value of the idle forwarding capability, and the current egress queue depth is the depth of the target egress queue or the depth of the egress queue corresponding to the target egress port.

In a possible design, the calculation module 1001 is further specifically configured to: subtract the total amount of the data passing through the target egress queue or the target egress port in the preset duration from the upper limit of the data forwarding amount of the target egress queue or the target egress port in the preset duration, to obtain a first subtraction result; add the first subtraction result and the preset queue depth, to obtain an addition result; subtract a sum of current egress queue depths from the addition result, to obtain a second subtraction result; and multiply the second subtraction result by a preset coefficient, to obtain the value of the credit counter, where a unit of the value of the credit counter is a byte.

In a possible design, the calculation module 1001 is further specifically configured to: subtract the total amount of the data passing through the target egress queue or the target egress port in the preset duration from the upper limit of the data forwarding amount of the target egress queue or the target egress port in the preset duration, to obtain a first subtraction result; add the first subtraction result and the preset queue depth, to obtain an addition result; subtract a sum of current egress queue depths from the addition result, to obtain a second subtraction result; multiply the second subtraction result by a preset coefficient, to obtain a multiplication result; and dividing the multiplication result by the preset duration, to obtain the value of the credit counter, where a unit of the value of the credit counter is a rate.

In a possible design, the network device 1000 is not the receiving device, and the network device 1000 further includes a sending module 1004. The sending module 1004 is configured to send the second packet to a next-hop device.

In a possible design, when the next-hop device is the receiving device, the sending module 1004 is specifically configured to send the second packet to the receiving device, to enable the receiving device to send, to the transmitting device, an acknowledgment packet carrying the decision result, where the acknowledgment packet indicates the transmitting device to adjust the sending window or the sending rate of the transmitting device based on the decision result.

In a possible design, the network device 1000 is the receiving device, and the network device 1000 further includes a sending module 1004. The sending module 1004 is configured to send, to the transmitting device, an acknowledgment packet carrying the decision result, where the acknowledgment packet indicates the transmitting device to adjust the sending window or the sending rate of the transmitting device based on the decision result.

It should be noted herein that, when the network device is the transmitting device, there are also two processing manners herein: (I) The decision module 1003 performs the step of "obtaining a second packet by including the decision result in the first packet". To be specific, when determining that the first packet does not have the preset mark, the decision module 1003 obtains the decision result based on the idle forwarding capability and the adjustment request, obtains a second packet by including the decision result in the first packet. Then, the sending module 1004 parses the second packet, includes, in an acknowledgment packet, the decision result obtained through parsing, and sends the acknowledgment packet to the transmitting device, where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet. (II) The decision module 1003 does not perform the step of "obtaining a second packet by including the decision result in the first packet". Instead, when determining that the first packet does not have the preset mark, the decision module 1003 obtains the decision result based on the idle forwarding capability and the adjustment request, where the decision result is not carried in the first packet, but is directly carried in an acknowledgment packet, and the sending module 1004 sends the acknowledgment packet to the transmitting device, where the acknowledgment packet indicates the transmitting device to adjust the sending window (when the adjustment request is a window adjustment request) or the sending rate (when the adjustment request is a rate adjustment request) of the transmitting device based on the decision result carried in the acknowledgment packet.

In a possible design, when the decision module 1003 uses, as the decision result, the marked information indicating that the first packet has the preset mark, the acknowledgment packet specifically indicates the transmitting device to decrease the sending window or the sending rate of the transmitting device based on the decision result, where a decrease amplitude is obtained based on a target preset value.

In a possible design, when the decision module 1003 uses the grant information as the decision result, the acknowledgment packet indicates the transmitting device to increase the sending window or the sending rate of the transmitting device based on the decision result, where an increase amplitude is obtained based on the value of the adjustment request.

In a possible design, when the decision module 1003 uses the rejection information as the decision result, the acknowledgment packet indicates the transmitting device not to adjust (to be specific, not to increase or decrease) the sending window or the sending rate of the transmitting device based on the decision result.

It should be noted that, content such as information exchange and an execution process between the modules/units in the network device 1000 is based on a same concept as the method embodiment corresponding to FIG. 4 or FIG. 5A and FIG. 5B in this application. For specific content, refer to the descriptions in the foregoing method embodiments in this application. Details are not described herein again.

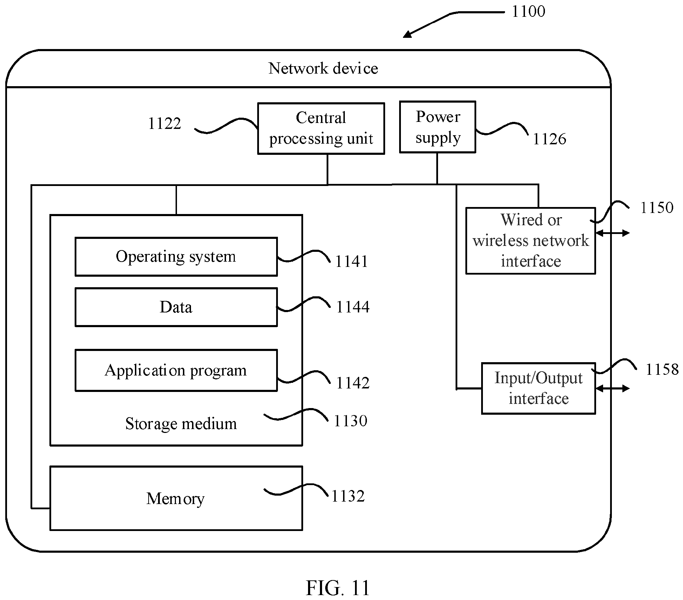

The following describes another network device according to an embodiment of this application. FIG. 11 is a schematic diagram of a structure of a network device according to an embodiment of this application. The network device 1000 described in the embodiment corresponding to FIG. 10 may be deployed on the network device 1100, to implement a function of the network device 1000 in the embodiment corresponding to FIG. 10. Specifically, the network device 1100 is implemented by one or more servers. The network device 1100 may have a large difference due to different configurations or performance, and may include one or more central processing units (central processing units, CPU) 1122, a memory 1132, and one or more storage media 1130 (for example, one or more massive storage devices) that store an application program 1142 or data 1144. The memory 1132 and the storage medium 1130 may perform transitory storage or persistent storage. The program stored in the storage medium 1130 may include one or more modules (not shown in the figure). Each module may include a series of instruction operations for the network device 1100. Further, the central processing unit 1122 may be configured to communicate with the storage medium 1130, to execute, on the network device 1100, the series of instruction operations in the storage medium 1130.

The network device 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, and FreeBSDTM.

In this embodiment of this application, the central processing unit 1122 is configured to perform the steps performed by the network device in the embodiment corresponding to FIG. 4 or FIG. 5A and FIG. 5B. For example, the central processing unit 1122 may be configured to: first calculate an idle forwarding capability of a target egress queue or a target egress port on the network device, where the idle forwarding capability represents a difference between an upper limit of a data forwarding amount of the target egress queue (including one or more egress queues) or the target egress port (including one or more egress ports) on the network device and a current actual forwarding amount, and may specifically represent a difference between an upper limit of a data forwarding amount of the target egress queue (including one or more egress queues) or the target egress port (including one or more egress ports) on the network device in preset duration (for example, 200 $\mu$s) and the current actual forwarding amount. The preset duration may be set by the network device. The network device is any device (including a transmitting device and a receiving device) on a path between the transmitting device and the receiving device. In addition, in addition to calculating the idle forwarding capability of the target egress queue or the target egress port on the network device, the central processing unit 1122 also obtains a packet carrying an adjustment request, where the packet may be referred to as a first packet, and the adjustment request may be a window adjustment request or a rate adjustment request. The window adjustment request indicates to adjust a sending window of the transmitting device, and the rate adjustment request indicates to adjust a sending rate of the transmitting device. After obtaining the first packet, whether the first packet has a preset mark is first determined. When the network device determines that the first packet does not have the preset mark, the network device obtains a decision result based on a value of the idle forwarding capability and a value II of the adjustment request, and obtains a second packet by including the decision result in the first packet. Specifically, the network device obtains the decision result by comparing the value of the idle forwarding capability with the value II of the adjustment request. Therefore, in a process of comparing the values, a unit of the value of the idle forwarding capability needs to be consistent with a unit of the value II of the adjustment request. If the units are inconsistent, the network device further needs to convert the units of the two values, to enable the units of the two values to be consistent.

It should be noted that a specific manner in which the central processing unit 1122 performs the foregoing steps is based on a same concept as the method embodiment corresponding to FIG. 4 or FIG. 5A and FIG. 5B in this application. Technical effects brought by the manner are the same as those in embodiments in this application. For specific content, refer to the descriptions in the foregoing method embodiments in this application. Details are not described herein again.

In addition, it should be noted that, the described apparatus embodiments are merely examples. The units described as separate parts may or may not be physically separate, and parts displayed as units may or may not be physical units, may be located in one position, or may be distributed on a plurality of network units. Some or all of the modules may be selected based on an actual requirement to implement the objectives of the solutions in embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software and necessary universal hardware, or by using dedicated hardware, including a dedicated integrated circuit, a dedicated CPU, a dedicated memory, a dedicated component, and the like. Usually, any functions that can be performed by a computer program can be easily implemented by using corresponding hardware. In addition, a specific hardware structure used to implement a same function may be of various forms, for example, in a form of an analog circuit, a digital circuit, or a dedicated circuit. However, for this application, software program implementation is a better implementation in most cases. Based on such an understanding, the technical solutions in this application essentially or the part that makes contributions to the prior art may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, or a network device) to perform the method in embodiments of this application.

All or some of the foregoing embodiments may be implemented by software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, like a training device or a data center, integrating one or more usable media. The usable medium may be a magnetic medium (for example, a floppy disk, a hard disk, or a magnetic tape), an optical medium (for example, DVD), a semiconductor medium (for example, a solid-state drive (solid-state drive, SSD)), or the like.

**Claims**

1.  An active queue management method for a network device, comprising:

    calculating, by the network device, an idle forwarding capability of a target egress queue or a target egress port on the network device, wherein the idle forwarding capability represents a difference between an upper limit of a data forwarding amount of the target egress queue or the target egress port and a current actual forwarding amount, the target egress queue comprises one or more egress queues, the target egress port comprises one or more egress ports, and the network device is any device on a path between a transmitting device and a receiving device;
    obtaining, by the network device, a first packet carrying an adjustment request, wherein the adjustment request indicates to adjust a sending window or a sending rate of the transmitting device; and
    when the network device determines that the first packet does not have a preset mark, obtaining, by the network device, a decision result based on the idle forwarding capability and the adjustment request, and obtaining a second packet by comprising the decision result in the first packet.

2.  The method according to claim 1, wherein the obtaining, by the network device, a decision result based on the idle forwarding capability and the adjustment request comprises:
    when the network device determines that a value of the idle forwarding capability is greater than or equal to a value of the adjustment request, using, by the network device, grant information as the decision result, wherein the grant information represents that the transmitting device is allowed to increase the sending window or the sending rate of the transmitting device.

3.  The method according to claim 1, wherein the obtaining, by the network device, a decision result based on the idle forwarding capability and the adjustment request comprises:

    when the network device determines that a value of the idle forwarding capability is greater than zero and less than a value of the adjustment request, marking, by the network device, the first packet based on a preset probability; and
    when the network device determines that the first packet is marked with the preset mark, using, by the network device as the decision result, marked information indicating that the first packet has the preset mark, wherein the marked information represents that the transmitting device is allowed to decrease the sending window or the sending rate of the transmitting device.

4.  The method according to claim 3, wherein the method further comprises:
    when the network device determines that the first packet is not marked with the preset mark, and a value of a deficit counter corresponding to the idle forwarding capability is greater than or equal to the value of the adjustment request, using, by the network device, grant information as the decision result, wherein the grant information represents that the transmitting device is allowed to increase the sending window or the sending rate of the transmitting device.

5. The method according to claim 3 or 4, wherein the method further comprises:
when the network device determines that the first packet is not marked with the preset mark, and the value of the deficit counter corresponding to the idle forwarding capability is less than the value of the adjustment request, using, by the network device, rejection information as the decision result, wherein the rejection information represents that the transmitting device is not allowed to adjust the sending window or the sending rate of the transmitting device.

6. The method according to claim 1, wherein the obtaining, by the network device, a decision result based on the idle forwarding capability and the adjustment request comprises:

   when the network device determines that a value of the idle forwarding capability is less than zero, marking, by the network device, the preset mark on the first packet; and
   using, by the network device as the decision result, marked information indicating that the first packet has the preset mark, wherein the marked information represents that the transmitting device is allowed to decrease the sending window or the sending rate of the transmitting device.

7. The method according to any one of claims 1 to 6, wherein the method further comprises:
when the network device determines that the first packet has the preset mark, using, by the network device as the decision result, the marked information indicating that the first packet has the preset mark, and obtaining a second packet by comprising the decision result in the first packet, wherein the marked information represents that the transmitting device is allowed to decrease the sending window or the sending rate of the transmitting device.

8. The method according to any one of claims 1 to 7, wherein the calculating, by the network device, an idle forwarding capability of a target egress queue or a target egress port on the network device comprises:
calculating, by the network device, a value of a credit counter based on an upper limit of a data forwarding amount of the target egress queue or the target egress port in preset duration and a total amount of data passing through the target egress queue or the target egress port in the preset duration, wherein the value of the credit counter represents the value of the idle forwarding capability.

9. The method according to claim 8, wherein the calculating, by the network device, a value of a credit counter based on an upper limit of a data forwarding amount of the target egress queue or the target egress port in preset duration and a total amount of data passing through the target egress queue or the target egress port in the preset duration comprises:
calculating, by the network device, the value of the credit counter based on the upper limit of the data forwarding amount of the target egress queue or the target egress port in the preset duration, the total amount of the data passing through the target egress queue or the target egress port in the preset duration, and a current egress queue depth, wherein the current egress queue depth is a depth of the target egress queue or a depth of an egress queue corresponding to the target egress port.

10. The method according to claim 9, wherein the calculating, by the network device, the value of the credit counter based on the upper limit of the data forwarding amount of the target egress queue or the target egress port in the preset duration, the total amount of the data passing through the target egress queue or the target egress port in the preset duration, and a current egress queue depth comprises:
calculating, by the network device, the value of the credit counter based on the upper limit of the data forwarding amount of the target egress queue or the target egress port in the preset duration, the total amount of the data passing through the target egress queue or the target egress port in the preset duration, the current egress queue depth, and a preset queue depth.

11. The method according to claim 10, wherein the calculating, by the network device, the value of the credit counter based on the upper limit of the data forwarding amount of the target egress queue or the target egress port in the preset duration, the total amount of the data passing through the target egress queue or the target egress port in the preset duration, the current egress queue depth, and a preset queue depth comprises:

   subtracting, by the network device, the total amount of the data passing through the target egress queue or the target egress port in the preset duration from the upper limit of the data forwarding amount of the target egress queue or the target egress port in the preset duration, to obtain a first subtraction result;

adding, by the network device, the first subtraction result and the preset queue depth, to obtain an addition result;

subtracting, by the network device, the current egress queue depth from the addition result, to obtain a second subtraction result; and

multiplying, by the network device, the second subtraction result by a preset coefficient, to obtain the value of the credit counter, wherein a unit of the value of the credit counter is a byte.

12. The method according to any one of claims 1 to 11, wherein the network device is not the receiving device, and the method further comprises:

sending, by the network device, the second packet to a next-hop device.

13. The method according to claim 12, wherein the next-hop device is the receiving device, and the sending, by the network device, the second packet to a next-hop device comprises:

sending, by the network device, the second packet to the receiving device, to enable the receiving device to send, to the transmitting device, an acknowledgment packet carrying the decision result, wherein the acknowledgment packet indicates the transmitting device to adjust the sending window or the sending rate of the transmitting device based on the decision result.

14. The method according to any one of claims 1 to 11, wherein the network device is the receiving device, and the method further comprises:

sending, by the network device to the transmitting device, an acknowledgment packet carrying the decision result, wherein the acknowledgment packet indicates the transmitting device to adjust the sending window or the sending rate of the transmitting device based on the decision result.

15. The method according to claim 13 or 14, wherein
when the network device uses, as the decision result, the marked information indicating that the first packet has the preset mark, the acknowledgment packet specifically indicates the transmitting device to decrease the sending window or the sending rate of the transmitting device based on the decision result, wherein a decrease amplitude is obtained based on a target preset value.

16. The method according to any one of claims 13 to 15, wherein
when the network device uses the grant information as the decision result, the acknowledgment packet indicates the transmitting device to increase the sending window or the sending rate of the transmitting device based on the decision result, wherein an increase amplitude is obtained based on the value of the adjustment request.

17. The method according to any one of claims 13 to 16, wherein
when the network device uses the rejection information as the decision result, the acknowledgment packet indicates the transmitting device not to adjust the sending window or the sending rate of the transmitting device based on the decision result.

18. A network device, comprising:

a calculation module, configured to calculate an idle forwarding capability of a target egress queue or a target egress port on the network device, wherein the idle forwarding capability represents a difference between an upper limit of a data forwarding amount of the target egress queue or the target egress port and a current actual forwarding amount, the target egress queue comprises one or more egress queues, the target egress port comprises one or more egress ports, and the network device is any device on a path between a transmitting device and a receiving device;

an obtaining module, configured to obtain a first packet carrying an adjustment request, wherein the adjustment request indicates to adjust a sending window or a sending rate of the transmitting device; and

a decision module, configured to: when the network device determines that the first packet does not have a preset mark, obtain a decision result based on the idle forwarding capability and the adjustment request, and obtain a second packet by comprising the decision result in the first packet.

19. The device according to claim 18, wherein the decision module is specifically configured to:
when the network device determines that a value of the idle forwarding capability is greater than or equal to a value of the adjustment request, use grant information as the decision result, wherein the grant information represents that the transmitting device is allowed to increase the sending window or the sending rate of the transmitting device.

20. The device according to claim 18, wherein the decision module is specifically configured to:

   when the network device determines that a value of the idle forwarding capability is greater than zero and less than a value of the adjustment request, mark the first packet based on a preset probability; and
   when the network device determines that the first packet is marked with the preset mark device, use, as the decision result, marked information indicating that the first packet has the preset mark, wherein the marked information represents that the transmitting device is allowed to decrease the sending window or the sending rate of the transmitting device.

21. The device according to claim 20, wherein the decision module is further configured to:
   when the network device determines that the first packet is not marked with the preset mark, and a value of a deficit counter corresponding to the idle forwarding capability is greater than or equal to the value of the adjustment request, use grant information as the decision result, wherein the grant information represents that the transmitting device is allowed to increase the sending window or the sending rate of the transmitting device.

22. The device according to claim 20 or 21, wherein the decision module is further configured to:
   when the network device determines that the first packet is not marked with the preset mark, and the value of the deficit counter corresponding to the idle forwarding capability is less than the value of the adjustment request, use rejection information as the decision result, wherein the rejection information represents that the transmitting device is not allowed to adjust the sending window or the sending rate of the transmitting device.

23. The device according to claim 18, wherein the decision module is further specifically configured to:

   when the network device determines that a value of the idle forwarding capability is less than zero, mark the preset mark on the first packet; and
   use, as the decision result, marked information indicating that the first packet has the preset mark, wherein the marked information represents that the transmitting device is allowed to decrease the sending window or the sending rate of the transmitting device.

24. The device according to any one of claims 18 to 23, wherein the decision module is further configured to:
   when the network device determines that the first packet has the preset mark, use, as the decision result, the marked information indicating that the first packet has the preset mark, and obtain a second packet by comprising the decision result in the first packet, wherein the marked information represents that the transmitting device is allowed to decrease the sending window or the sending rate of the transmitting device.

25. The device according to any one of claims 18 to 24, wherein the calculation module is specifically configured to:
   calculate a value of a credit counter based on an upper limit of a data forwarding amount of the target egress queue or the target egress port in preset duration and a total amount of data passing through the target egress queue or the target egress port in the preset duration, wherein the value of the credit counter represents the value of the idle forwarding capability.

26. The device according to any one of claims 18 to 25, wherein the calculation module is further specifically configured to:
   calculate the value of the credit counter based on the upper limit of the data forwarding amount of the target egress queue or the target egress port in the preset duration, the total amount of the data passing through the target egress queue or the target egress port in the preset duration, and a current egress queue depth, wherein the value of the credit counter represents the value of the idle forwarding capability, and the current egress queue depth is a depth of the target egress queue or a depth of an egress queue corresponding to the target egress port.

27. The device according to any one of claims 18 to 26, wherein the calculation module is further specifically configured to:
   calculate the value of the credit counter based on the upper limit of the data forwarding amount of the target egress queue or the target egress port in the preset duration, the total amount of the data passing through the target egress queue or the target egress port in the preset duration, the current egress queue depth, and a preset queue depth, wherein the value of the credit counter represents the value of the idle forwarding capability, and the current egress queue depth is the depth of the target egress queue or the depth of the egress queue corresponding to the target egress port.

28. The device according to claim 27, wherein the calculation module is further specifically configured to:

subtract the total amount of the data passing through the target egress queue or the target egress port in the preset duration from the upper limit of the data forwarding amount of the target egress queue or the target egress port in the preset duration, to obtain a first subtraction result;

add the first subtraction result and the preset queue depth, to obtain an addition result;

subtract the current egress queue depth from the addition result, to obtain a second subtraction result; and multiply the second subtraction result by a preset coefficient, to obtain the value of the credit counter, wherein a unit of the value of the credit counter is a byte.

29. The device according to any one of claims 18 to 28, wherein the network device is not the receiving device, and the device further comprises:

a sending module, configured to send the second packet to a next-hop device.

30. The device according to claim 29, wherein the next-hop device is the receiving device, and the sending module is specifically configured to:

send the second packet to the receiving device, to enable the receiving device to send, to the transmitting device, an acknowledgment packet carrying the decision result, wherein the acknowledgment packet indicates the transmitting device to adjust the sending window or the sending rate of the transmitting device based on the decision result.

31. The device according to any one of claims 18 to 28, wherein the network device is the receiving device, and the device further comprises:

a sending module, configured to send, to the transmitting device, an acknowledgment packet carrying the decision result, wherein the acknowledgment packet indicates the transmitting device to adjust the sending window or the sending rate of the transmitting device based on the decision result.

32. A network device, comprising a processor and a memory, wherein the processor is coupled to the memory;

the memory is configured to store a program; and
the processor is configured to execute the program in the memory, to enable the network device to perform the method according to any one of claims 1 to 17.

33. A computer-readable storage medium, comprising a program, wherein when the program is run on a computer, the computer is enabled to perform the method according to any one of claims 1 to 17.

34. A computer program product comprising instructions, wherein when the computer program product runs on a computer, the computer is enabled to perform the method according to any one of claims 1 to 17.

35. A chip, wherein the chip comprises a processor and a data interface, and the processor performs the method according to any one of claims 1 to 17 by reading, through the data interface, instructions stored in a memory.

FIG. 1

Step 2: A packet sent by each
transmitting device carries an
adjustment request

Transmitting
device 1

Step 1: A network device
periodically calculates an
idle forwarding capability

Transmitting
device 2

...

Network device

Step 3: The network device
determines a decision result
(grant/rejection/marked)

Transmitting device n

Receiving device

Step 4: The receiving device
returns an acknowledgment
packet carrying the decision
result (grant/rejection/marked)

Step 5: Each transmitting device adjusts a sending
window or a sending rate based on the decision
result (grant/rejection/marked)

FIG. 2

Step 2: A packet sent by each
transmitting device carries an
adjustment request

Transmitting
device 1

Transmitting
device 2

...

Transmitting
device n

Step 1: A network device
periodically calculates an
idle forwarding capability

Network device 1

Step 3: The network
device determines a
decision result (grant/
rejection/marked)

...

Step 1: A network device
periodically calculates an
idle forwarding capability

Network device m

Step 3: The network
device determines a
decision result (grant/
rejection/marked)

...

Receiving device

Step 4: The receiving device
returns an acknowledgment
packet carrying the decision
result (grant/rejection/marked)

Step 5: Each transmitting device adjusts a
sending window or a sending rate based on the
decision result (grant/rejection/marked)

FIG. 3

A network device calculates an idle forwarding capability of a target egress queue or a target egress port on the network device, where the idle forwarding capability represents a difference between an upper limit of a data forwarding amount of the target egress queue or the target egress port and a current actual forwarding amount, and the network device is any device on a path between a transmitting device and a receiving device

401

The network device obtains a first packet carrying an adjustment request, where the adjustment request indicates to adjust a sending window or a sending rate of the transmitting device

402

When the network device determines that the first packet does not have a preset mark, the network device obtains a decision result based on the idle forwarding capability and the adjustment request, and includes the decision result in the first packet to obtain a second packet

403

FIG. 4

First packet egress queue

Step 1

Is a first packet marked? — Yes → $CC=CC+\beta$ → Continue to deliver the marked first packet

No

$CC \geq II$? — Yes → $CC=CC-II$ → Continue to deliver the unmarked first packet

Step 2

No

$0 \leq CC < II$? — Yes → Randomly mark the packet based on a preset probability p → Is the packet marked successfully? — Yes → $DC=DC+\beta$ → Continue to deliver the marked first packet

Step 2

Step 3

No

TO FIG. 5B

TO FIG. 5B

FIG. 5A

EP 4 344 153 A1

36

CONT.
FROM
FIG. 5A

DC≥II? — Step 4

Yes → DC=DC–II → Continue to deliver the unmarked first packet

No → Enable II=0 — Step 5 → Continue to deliver the unmarked first packet

CONT.
FROM
FIG. 5A

No → CC<0? — Step 2

Yes → Mark the first packet — Step 6 → CC=CC+β → Continue to deliver the marked first packet

FIG. 5B

Acknowledgment packet

Transmitting
device

Parse the
acknowledgment
packet to obtain a
decision result

| The decision result is grant information | The decision result is rejection information | The decision result is marked information |
|---|---|---|
| Increase a sending window or a sending rate | Do not adjust a sending window or a sending rate | Decrease a sending window or a sending rate |

FIG. 6

FIG. 7

FIG. 8

S1 — pkt $\left(\text{II}=\dfrac{\alpha}{cwnd}\right)$

S2 — Network device

S3 — pkt $\left(\text{II}=\dfrac{\alpha}{cwnd}/0/\text{M}\right)$

S4 — ACK $\left(\text{II}=\dfrac{\alpha}{cwnd}/0/\text{M}\right)$

S5 — ACK $\left(\text{II}=\dfrac{\alpha}{cwnd}/0/\text{M}\right)$

S6 — cwnd += ACK.II
or cwnd -= $\beta$

Transmitting device

M: Marked information

Receiving device

FIG. 9

FIG. 10

1100

Network device

1122 ⌇ Central processing unit | Power supply ⌇ 1126

Wired or wireless network interface ⌇ 1150

Operating system ⌇ 1141

Data ⌇ 1144

Application program ⌇ 1142

Storage medium ⌇ 1130

Input/Output interface ⌇ 1158

Memory ⌇ 1132

FIG. 11

## INTERNATIONAL SEARCH REPORT

International application No.

**PCT/CN2022/100657**

### A. CLASSIFICATION OF SUBJECT MATTER

H04L 47/12(2022.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 出队列, 出端口, 主动队列管理, 空闲, 闲置, 可用, 剩余, 转发, 带宽, 发送能力, 信用证计数器, 赤字计数器, 差额计数器, 请求, 需求, 要求, 申请, 发送窗口, 发送速率, 比较, 对比, 判断, 判定, 决策, 大于, 超过, 多于, 高于, active queue management, AQM, CC, DC, deficit counter, credit counter, dequeue, dequeue port, idle, available, remaining, forwarding, bandwidth, sending capabilities, request, demand, requirement, application, sending window?, sending rate, compare, contrast, decision, greater

### C. DOCUMENTS CONSIDERED TO BE RELEVANT

| Category* | Citation of document, with indication, where appropriate, of the relevant passages | Relevant to claim No. |
|---|---|---|
| X | CN 103430489 B (HUAWEI TECHNOLOGIES CO., LTD.) 30 November 2016 (2016-11-30) description, paragraphs [0002]-[0187], and figures 1-11 | 1-35 |
| A | CN 106302228 A (CENTRAL SOUTH UNIVERSITY) 04 January 2017 (2017-01-04) entire document | 1-35 |
| A | CN 112822120 A (HUAWEI TECHNOLOGIES CO., LTD.) 18 May 2021 (2021-05-18) entire document | 1-35 |
| A | CN 112468403 A (HUAWEI TECHNOLOGIES CO., LTD.) 09 March 2021 (2021-03-09) entire document | 1-35 |
| A | US 2015207628 A1 (HILLA, R. J.) 23 July 2015 (2015-07-23) entire document | 1-35 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2022** | **02 September 2022** |

| Name and mailing address of the ISA/CN | Authorized officer |
|---|---|
| China National Intellectual Property Administration (ISA/ CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/100657**

| Patent document cited in search report | | | Publication date (day/month/year) | Patent family member(s) | | | Publication date (day/month/year) |
|---|---|---|---|---|---|---|---|
| CN | 103430489 | B | 30 November 2016 | CN | 103430489 | A | 04 December 2013 |
| CN | 106302228 | A | 04 January 2017 | None | | | |
| CN | 112822120 | A | 18 May 2021 | None | | | |
| CN | 112468403 | A | 09 March 2021 | None | | | |
| US | 2015207628 | A1 | 23 July 2015 | US | 9647838 | B2 | 09 May 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110721083